# EUROPÄISCHE PATENTSCHRIFT

(11) **EP 4 431 228 B1**
(45) Veröffentlichungstag und Bekanntmachung des Hinweises auf die Patenterteilung: **30.04.2025**
(21) Anmeldenummer: 23161999.0
(22) Anmeldetag: 15.03.2023
(51) Int. Cl.: B23Q 16/10, F16D 65/18

(54) **GEHÄUSETEIL FÜR EINE PNEUMATISCHE KLEMM- UND/ODER BREMSVORRICHTUNG**
HOUSING PART FOR A PNEUMATIC CLAMPING AND/OR BRAKING DEVICE
PARTIE DE BOÎTIER POUR UN DISPOSITIF DE SERRAGE ET/OU DE FREINAGE PNEUMATIQUE

(43) Veröffentlichungstag der Anmeldung: 18.09.2024
(73) Patentinhaber: HEMA Maschinen- und Apparateschutz GmbH, 63500 Seligenstadt (DE)
(72) Erfinder: Likus, Edmund, 63500 Seligenstadt (DE)
(74) Vertreter: Herrmann, Daniel

(56) Entgegenhaltungen:
- EP-B1- 1 651 881
- WO-A1-2004/067222
- WO-A1-2005/085653
- CN-A- 107 127 360

## Beschreibung

### TECHNISCHES GEBIET

Die Erfindung betrifft ein Gehäuseteil für eine pneumatische Klemm- und/oder Bremsvorrichtung und eine pneumatische Klemm- und/oder Bremsvorrichtung mit solch einem Gehäuseteil.

### HINTERGRUND DER ERFINDUNG

Bei der Herstellung von Werkzeug- oder Maschinenteilen werden Bearbeitungsmaschinen, insbesondere Arbeitsspindeln oder andere Werkzeugmaschinen, verwendet, die mittels an einer Welle befestigten Werkzeugen Material von einem Werkstück bearbeiten, insbesondere um es in die gewünschte Form zu bringen. Die Welle kann eine Rotationsachse oder Schwenkachse von einer solchen Maschine sein. Weiterhin werden mittels einer Welle rotier- oder schwenkbare Tische dazu verwendet, Werkzeuge oder Werkstücke in die geeignete Bearbeitungsposition zu stellen oder Werkstücke mit entsprechenden Drehzahlen zu bewegen. Voraussetzung für ein genaues und effizientes Bearbeiten ist dabei unter Anderem eine hohe Drehzahl der Welle. Notfall- bzw. Sicherheitssysteme haben daher die Aufgabe, die Welle bei Störung oder Ausfall der Systeme, wie beispielsweise Stromausfall oder Kabelbruch, zu stoppen bzw. in einer festen Position zu halten und damit zu fixieren.

Gängige Bearbeitungsmaschinen verfügen dabei über elektromagnetische, hydraulische oder pneumatische Klemm- und/oder Bremsvorrichtungen. Solche Vorrichtungen verfügen über einen Reibbelag, der mittels Kraftübertragung reibschlüssig mit der Welle verbunden werden kann. Dadurch wird ein unterschiedlich schnelles Fixieren der Welle ermöglicht.

Bei hydraulischen Klemmvorrichtungen wird eine Kammer mit Hydrauliköl beaufschlagt und klemmt die sich drehende Welle oder Scheibe fest. Auch passive Hydraulik-Klemmen sind bekannt. Solche hydraulischen Klemmen weisen jedoch lange Reaktionszeiten auf bzw. kurze Reaktionszeiten erfordern dort einen sehr hohen Aufwand. Ferner ist das Hydraulikmaterial, insbesondere Hydraulikventile und Hydraulikrohre, kostspielig und erfordert längere Montagezeiten. Auch ist durch das Hydrauliköl ein Mehraufwand für die Aufrechterhaltung der Sauberkeit im Umfeld einer hydraulischen Klemme zu verzeichnen.

Bei pneumatischen Klemm- und/oder Bremsvorrichtungen werden üblicherweise elastische Komponenten, insbesondere federnde Platten, mit Druckluft beaufschlagt und können einige der genannten Nachteile von hydraulischen Klemmvorrichtungen überwinden.

EP 1 585 616 B1 und EP 1 651 881 B1 beschreiben pneumatische Klemmvorrichtungen mit zwei ringförmigen Federplatten, die in ein Gehäuse der Klemmvorrichtungen eingebracht werden und dort einen Druckraum bilden, der mit Druckluft beaufschlagt oder be- und entlüftet werden kann, um die Biegung der Federplatten zu ändern und dadurch zwischen einem geschlossenen Zustand der Klemmvorrichtungen, in dem ein zu klemmendes Objekt wie eine rotierbare Welle geklemmt wird, und einem offenen Zustand der Klemmvorrichtungen, in dem das Objekt frei ist, zu wechseln. In der Praxis hat sich jedoch gezeigt, dass die gewünschte Öffnung- und Schließfunktion der pneumatischen Klemmvorrichtungen nicht axialsymmetrisch über den Umfang der ringförmigen Federplatten erzielt werden kann. So wurde beispielsweise eine ungleichmäßige Klemmkraftverteilung am Umfang der Welle und damit einhergehende Beschädigungen an der Welle beobachtet. Eine Vorrichtung gemäß dem Oberbegriff des Anspruchs 1 ist aus der CN 107 127 360 A bekannt.

### KURZBESCHREIBUNG DER ERFINDUNG

Ausgehend von dem eingangs genannten Stand der Technik liegt der Erfindung die Aufgabe zugrunde, eine pneumatische Klemm- und/oder Bremsvorrichtung zu befähigen, deren gewünschte symmetrische Öffnung- und Schließfunktion verlässlich zu erzielen.

Die Erfindung löst diese Aufgabe mit einem Gehäuseteil mit den Merkmalen des Patentanspruchs 1 und mit einer Klemm- und/oder Bremsvorrichtung mit den Merkmalen des Patentanspruchs 15. Bevorzugte Ausführungsformen sind in den abhängigen Ansprüchen, in der Beschreibung und in den Figuren beschrieben.

Entsprechend der erfindungsgemäßen Lösung wird ein Gehäuseteil für eine pneumatische Klemm- und/oder Bremsvorrichtung vorgeschlagen, das Gehäuseteil umfassend: eine ringförmige Aussparung zum Einklemmen einer ringförmigen Federplatte zwischen einer durch die Aussparung definierten ersten Anlagefläche des Gehäuseteils und einer durch die Aussparung definierten zweiten Anlagefläche des Gehäuseteils; ein Klemmelement mit einer Klemmfläche, die ausgelegt ist, wenn die Federplatte derart in der Aussparung zwischen der ersten Anlagefläche und der zweiten Anlagefläche eingeklemmt ist, dass sich ein erstes Ende der Federplatte an der ersten Anlagefläche abstützt, sich die Federplatte von der ersten Anlagefläche bis zu der zweiten Anlagefläche erstreckt, und ein zweites Ende der Federplatte auf die zweite Anlagefläche drückt, eine Klemm- und/oder Bremskraft auf ein zu klemmendes und/oder zu bremsendes Objekt zu übertragen; wobei das Gehäuseteil ein erstes Einrastmittel und ein zweites Einrastmittel umfasst, wobei, wenn die Federplatte in der Aussparung zwischen der ersten Anlagefläche und der zweiten Anlagefläche eingeklemmt ist, das erste Einrastmittel ausgelegt ist, das erste Ende der Federplatte an der ersten Anlagefläche einzurasten und das zweite Einrastmittel ausgelegt ist, das zweite Ende der Federplatte an der zweiten Anlagefläche einzurasten.

Entsprechend der erfindungsgemäßen Lösung wird ferner eine Klemm- und/oder Bremsvorrichtung zum Klemmen und/oder Bremsen eines zu klemmenden und/oder bremsenden Objekts, die Vorrichtung umfassend: ein Gehäuse umfassend ein erstes erfindungsgemäßes Gehäuseteil und ein zweites erfindungsgemäßes Gehäuseteil, wobei die beiden Gehäuseteile derart zueinander angeordnet und miteinander befestigt sind, dass die Aussparungen der ersten und zweiten Gehäuseteile zusammen einen Innenraum innerhalb des Gehäuses bilden; eine in dem Innenraum angeordnete Feder (z.B. Biegefeder, wie eine Blattfeder) umfassend eine erste ringförmige Federplatte (z.B. Biegefeder, wie eine Blattfeder) und eine zweite ringförmige Federplatte (z.B. Biegefeder, wie eine Blattfeder), wobei die Federplatten derart innerhalb des Innenraums angeordnet sind, dass in dem Innenraum mindestens ein Druckraum gebildet wird, der zumindest teilweise durch die Federplatten begrenzt wird, wobei der Druckraum be- oder entlüftbar ist und mit Überdruck eines dem Gehäuse zuführbaren Druckmediums (z.B. Druckluft) beaufschlagbar ist, wobei die erste Federplatte derart zwischen der ersten Anlagefläche des ersten Gehäuseteils und der zweiten Anlagefläche des ersten Gehäuseteils eingeklemmt ist, dass ein erstes Ende der ersten Federplatte durch das erste Einrastmittel des ersten Gehäuseteils eingerastet ist und ein zweites Ende der ersten Federplatte durch das zweite Einrastmittel des ersten Gehäuseteils eingerastet ist; wobei die zweite Federplatte derart zwischen der ersten Anlagefläche des zweiten Gehäuseteils und der zweiten Anlagefläche des zweiten Gehäuseteils eingeklemmt ist, dass ein erstes Ende der zweiten Federplatte durch das erste Einrastmittel des zweiten Gehäuseteils eingerastet ist und ein zweites Ende der zweiten Federplatte durch das zweite Einrastmittel des zweiten Gehäuseteils eingerastet ist; und wobei die Federplatten derart relativ zu den mindestens einen Druckraum angeordnet sind, dass durch Be- oder Entlüften des Druckraums oder Beaufschlagung des Druckraum mit Überdruck, eine Biegung mindestens einer der Federplatten (z.B. transversale Biegung; Biegung senkrecht zur Längsachse der Federplatte; die Längsachse verbindet die beiden Enden einer jeden Federplatte) veränderbar ist und dadurch die Vorrichtung zwischen einem geöffneten Zustand, in dem das Objekt von den Klemmflächen beabstandet ist, und einem geschlossenen Zustand, in dem ein oder mehrere der Klemmflächeneine Klemm- und/oder Bremskraft auf das Objekt übertragen, wechselt. Beispielsweise kann die Vorrichtung dabei von dem geschlossenen Zustand in den geöffneten Zustand wechseln oder umgekehrt. In dem geöffneten Zustand der Vorrichtung ist das Objekt frei beweglich (z.B. frei um eine Rotationsachse rotierbar oder linear entlang der Achse beweglich), während im geschlossenen Zustand der Vorrichtung das Objekt geklemmt und/oder gebremst wird und dadurch nicht frei beweglich ist (z.B. nicht um die Rotationsachse rotierbar oder nicht linear entlang der Achse beweglich).

Der vorliegenden Erfindung liegt die Erkenntnis der Erfinder zugrunde, dass für die Öffnung- und Schließfunktion der Klemm- und/oder Bremsvorrichtung die axiale Positionierung der Federplatten innerhalb des Gehäuses der Klemm- und/oder Bremsvorrichtung von maßgeblicher Bedeutung ist. Insbesondere haben die Erfinder erkannt, dass die axiale Positionierung der Federplatten bei der Montage bisher maßgeblich vom axialen Einpressdruck abhängte und deshalb die Federplatten leicht unterschiedliche axiale Positionen innerhalb des Gehäuses einnehmen konnten. Die Erfinder haben erkannt, dass eine wohldefinierte und symmetrische Positionierung der Federplatten innerhalb des Gehäuses verlässlich erreicht werden sollte, um die gewünschte symmetrische Öffnung- und Schließfunktion der Klemm- und/oder Bremsvorrichtung verlässlich zu erzielen. Eine solche wohldefinierte und symmetrische Positionierung der Federplatten innerhalb des Gehäuses stellte bisher hohe Anforderungen an das axiale Einpressen der Federn in das Gehäuse während der Montage und hat sich in der Praxis bisher als schwierig und aufwendig erwiesen.

Vor diesem Hintergrund haben die Erfinder erkannt, dass durch ein Gehäuseteil, das ein erstes Einrastmittel und ein zweites Einrastmittel umfasst, die jeweils ausgelegt sind, ein anderes Ende einer eingeklemmten Federplatte einzurasten, eine vorbestimmte axiale Positionierung der Federplatten innerhalb eines Gehäuses einer pneumatischen Klemm- und/oder Bremsvorrichtung erreicht wird, die nicht mehr maßgeblich von der axialen Einpresskraft bei der Montage abhängt, sondern eine wiederholbar, wohldefinierte und symmetrische Positionierung der Federplatten innerhalb des Gehäuses der Klemm- und/oder Bremsvorrichtung erreicht wird. Diese Einrastmittel haben sich in der Praxis auch bei der Montage bewährt, da sie die Montage der Federplatten sogar vereinfachen. Hinzu kommt, dass die Einrastmittel weitere Vorteile der im Folgenden beschriebenen Art bewirken, wie beispielweise eine verbesserte Dichtheit innerhalb des Gehäuses, so dass sich die Einrastmittel vielfältig positiv auf den Betrieb des Gesamtsystems der Klemm- und/oder Bremsvorrichtung auswirken.

Vorzugsweise umfasst das erste Einrastmittel einen ersten Vorsprung und einen ersten Anschlag, die jeweils die erste Anlagefläche derart begrenzen, dass das erste Einrastmittel ausgelegt ist, das erste Ende der Federplatte zwischen dem ersten Vorsprung und dem ersten Anschlag im Bereich der ersten Anlagefläche einzurasten. Das zweite Einrastmittel kann bevorzugt einen zweiten Vorsprung und einen zweiten Anschlag umfassen, die jeweils die zweite Anlagefläche derart begrenzen, dass das zweite Einrastmittel ausgelegt ist, das zweite Ende der Federplatte zwischen dem zweiten Vorsprung und dem zweiten Anschlag im Bereich der zweiten Anlagefläche einzurasten. Durch diese spezielle Realisierung der ersten und zweiten Einrastmittel wird eine besonders effektive Einrastung der Federplatten bewirkt, die aber auch gleichzeitig das Einführen der Federplatten in die Gehäuseteile erleichtern und keine zusätzlichen Bauteile und Materialien für das Gehäuse erfordern, was vorteilhaft für die Herstellung und Montage ist.

Jeder der Vorsprünge kann einen Höhenübergang am Übergang des Vorsprungs zur dazugehörigen bzw. angrenzenden Anlagefläche umfassen. Jeder der Vorsprünge kann als Höhenübergang eine Stufe oder Rampe umfassen. Die Rampe kann eine schiefe Ebene sein, kann aber auch anders geformte Schrägen aufweisen, wie beispielsweise eine Krümmung. Andere Ausgestaltungen der Vorsprünge sind jedoch ebenso denkbar.

Besonders bevorzugt kann jeder der Vorsprünge um 0,025 mm bis 0,15 mm, bevorzugt 0,05 mm bis 0,1 mm, besonders bevorzugt um 0,1 mm oder 0,05 mm gegenüber der jeweiligen Anlagefläche in einer radialen Richtung der ringförmigen Aussparung in die Aussparung (11) hinein vorstehen. Ein solches Vorstehen durch die Vorsprünge kann besonders vorteilhaft für die verlässlich Einrastung der Federplatten im Hinblick auf übliche Verkürzungen der Feder im Betrieb einerseits und das einfache Einführen der Federplatten in die Gehäuseteile andererseits sein.

Die ringförmige Aussparung kann eine ringförmige Öffnung im Gehäuseteil definieren, wobei die ringförmige Öffnung zwischen einem ersten ringförmigen Rand des Gehäuseteils und einem zweiten ringförmigen Rand des Gehäuseteils gebildet ist. Bevorzugt kann der erste Vorsprung zwischen dem ersten ringförmigen Rand und der ersten Anlagefläche auf einer Innenseite des Gehäuseteils im Bereich der Aussparung angeordnet sein und sich ggf. von dem ersten ringförmigen Rand bis hin zu der ersten Anlagefläche erstrecken. Der Höhenübergang des ersten Vorsprungs kann an die erste Anlagefläche angrenzen. In einem Abstand von 1 mm bis 1,8 mm, bevorzugt 1 mm bis 1,5 mm, besonders bevorzugt 1,2 mm oder 1,1 mm von dem ersten ringförmigen Rand kann der Höhenübergang (z.B. die Stufe oder Rampe) des ersten Vorsprungs auf der Innenseite des Gehäuseteils im Bereich der Aussparung vorzugsweise angeordnet sein und der erste Vorsprung kann sich über diesen Abstand hinweg erstrecken. Der erste Vorsprung kann sich kontinuierlich von dem ersten ringförmigen Rand bis zu dem Höhenübergang erstrecken. Bevorzugt kann der zweite Vorsprung zwischen dem zweiten ringförmigen Rand und der zweiten Anlagefläche auf einer Innenseite des Gehäuseteils im Bereich der Aussparung angeordnet sein und sich ggf. von dem zweiten ringförmigen Rand bis hin zu der zweiten Anlagefläche erstrecken. Der Höhenübergang des zweiten Vorsprungs kann an die zweite Anlagefläche angrenzen. In einem Abstand von 1 mm bis 1,8 mm, bevorzugt 1 mm bis 1,5 mm, besonders bevorzugt 1,2 mm oder 1,1 mm von dem zweiten ringförmigen Rand kann der Höhenübergang (z.B. die Stufe oder Rampe) des zweiten Vorsprungs auf der Innenseite des Gehäuseteils im Bereich der Aussparung vorzugsweise angeordnet sein und der zweite Vorsprung kann sich über diesen Abstand hinweg erstrecken. Der zweite Vorsprung kann sich kontinuierlich von dem zweiten ringförmigen Rand bis zu dem Höhenübergang erstrecken.

Eine solche Anordnung der Vorsprünge bzw. Stufen oder Rampen kann besonders vorteilhaft für die verlässliche Positionierung der Federplatten innerhalb der Aussparung bzw. des Gehäuses im Hinblick auf übliche Betriebsparameter der Klemmvorrichtung einerseits und das einfache Einführen der Federplatten in die Gehäuseteile andererseits sein.

Der Abstand zwischen dem erstem Vorsprung und dem erstem Anschlag und der Abstand zwischen dem zweitem Vorsprung und dem zweitem Anschlag kann jeweils 1 mm bis 1,5 mm, 1,1 mm bis 1,4 mm, vorzugsweise 1,2 mm betragen, was besonders angepasst für eine effektive Einrastung von Federn mit üblichen Dicken und üblichen Gummierungen ist.

Sofern diese Kurzbeschreibung der Erfindung Merkmale beschreibt, die nicht in den Patentansprüchen aufgeführt sind, so stellen diese Merkmale keine wesentlichen Merkmale in dem Sinne dar, dass diese Merkmale zwangsläufig zur Beschreibung der Erfindung in die Patentansprüche aufzunehmen sind, jedoch sind diese Merkmale besonders prominente bevorzugte Realisierungen der beanspruchten Erfindung, können mit jedem der Patentansprüche kombiniert werden und können auch untereinander beliebig kombiniert werden.

### KURZBESCHREIBUNG DER FIGUREN

Figur 1A zeigt einen schematischen Querschnitt durch eine erfindungsgemäße nach innen gerichtete, passive pneumatische Klemm- und/oder Bremsvorrichtung im geschlossenen Zustand.
Figur 1B zeigt einen schematischen Querschnitt durch eine erfindungsgemäße nach außen gerichtete, passive pneumatische Klemm- und/oder Bremsvorrichtung im geschlossenen Zustand.
Figur 2A zeigt einen schematischen Querschnitt durch eine erfindungsgemäße nach innen gerichtete, passive pneumatische Klemm- und/oder Bremsvorrichtung im offenen Zustand.
Figur 2B zeigt einen schematischen Querschnitt durch eine erfindungsgemäße nach außen gerichtete, passive pneumatische Klemm- und/oder Bremsvorrichtung im offenen Zustand.
Figur 3A zeigt einen schematischen Querschnitt durch eine erfindungsgemäße nach innen gerichtete, aktive pneumatische Klemm- und/oder Bremsvorrichtung im offenen Zustand.
Figur 3B zeigt einen schematischen Querschnitt durch eine erfindungsgemäße nach außen gerichtete, aktive pneumatische Klemm- und/oder Bremsvorrichtung im offenen Zustand.
Figur 4A zeigt einen schematischen Querschnitt durch eine erfindungsgemäße nach innen gerichtete, aktive pneumatische Klemm- und/oder Bremsvorrichtung im geschlossenen Zustand.
Figur 4B zeigt einen schematischen Querschnitt durch eine erfindungsgemäße nach außen gerichtete, aktive pneumatische Klemm- und/oder Bremsvorrichtung im geschlossenen Zustand.
Figur 5A zeigt einen Querschnitt durch eine erfindungsgemäße pneumatische Klemm- und/oder Bremsvorrichtung in dreidimensionaler Darstellung.
Figuren 5B bis 5D zeigen eine Variante eines aus Figur 5A entnommenen Gehäuseteils nach dem Stand der Technik.
Figuren 6A bis 6B zeigen jeweils im oberen Bereich der jeweiligen Figur die Varianten des Gehäuseteils nach dem Stand der Technik wie in den Figuren 5B bis 5D dargestellt.

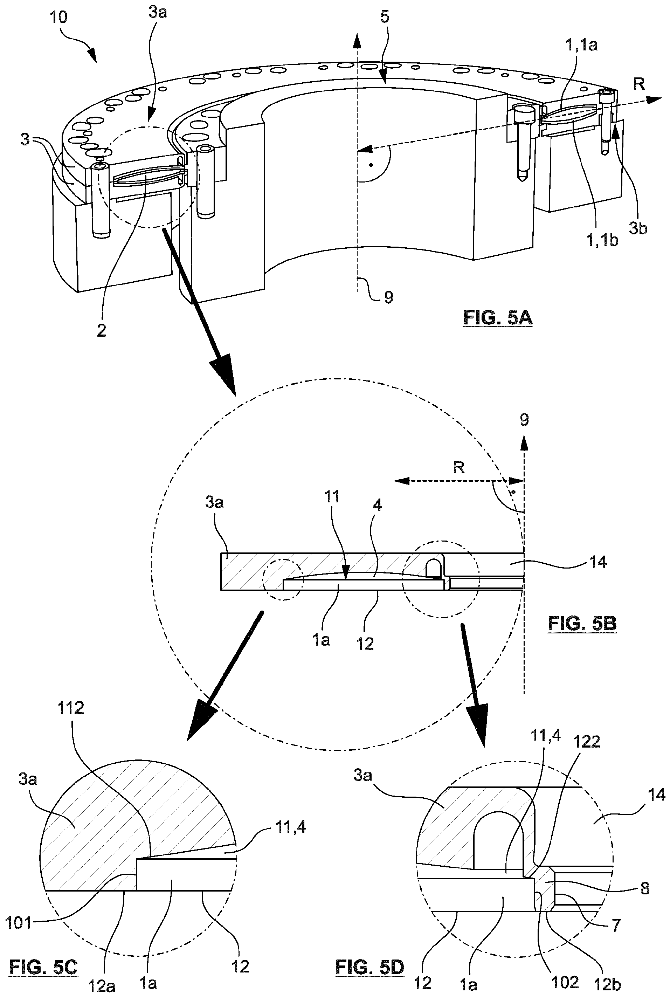

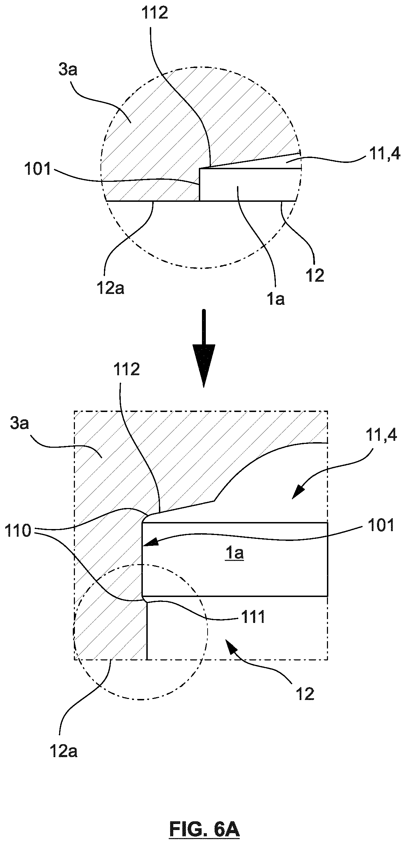

Figuren 6A bis 6B zeigen jeweils im unteren Bereich der jeweiligen Figur eine erfindungsgemäße Variante eines aus Figur 5A entnommenen Gehäuseteils.

Bauteile, die in mehreren Figuren dargestellt sind, tragen dieselben Referenzzeichen.

### DETAILLIERTE BESCHREIBUNG

Die Erfindung betrifft ein Gehäuseteil für eine pneumatische Klemm- und/oder Bremsvorrichtung und eine pneumatische Klemm- und/oder Bremsvorrichtung mit einem erfindungsgemäßen Gehäuseteil.

Wenn in diesem Dokument von der Vorrichtung "Klemme" oder "Klemmvorrichtung", der "Klemmkraft" oder dem Vorgang des "Klemmens" gesprochen wird, dann ist gleichermaßen auch die Vorrichtung der "Bremse" oder "Bremsvorrichtung" bzw. die "Bremskraft" bzw. der Vorgang des "Bremsens" umfasst.

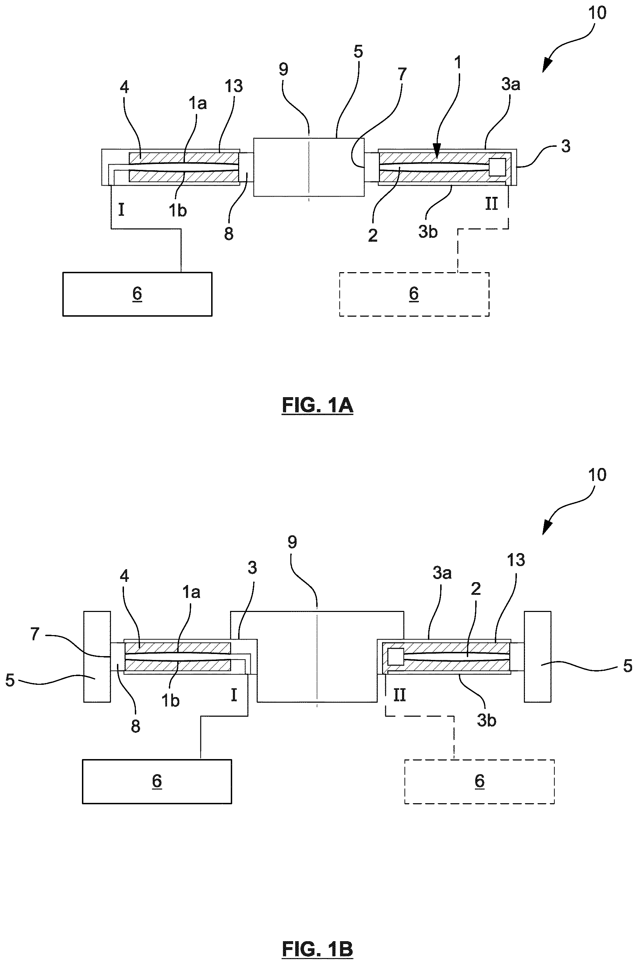

Die Figuren 1A bis 5A zeigen schematisch Querschnitte durch eine solche erfindungsgemäße pneumatische Klemmvorrichtung 10 mit einem Gehäuse 3, das zwei erfindungsgemäße Gehäuseteile 3a, 3b umfasst, sowie mit einer in dem Gehäuse 3 angeordneten Feder 1, die mindestens zwei ringförmige Federplatten 1a, 1b umfasst.

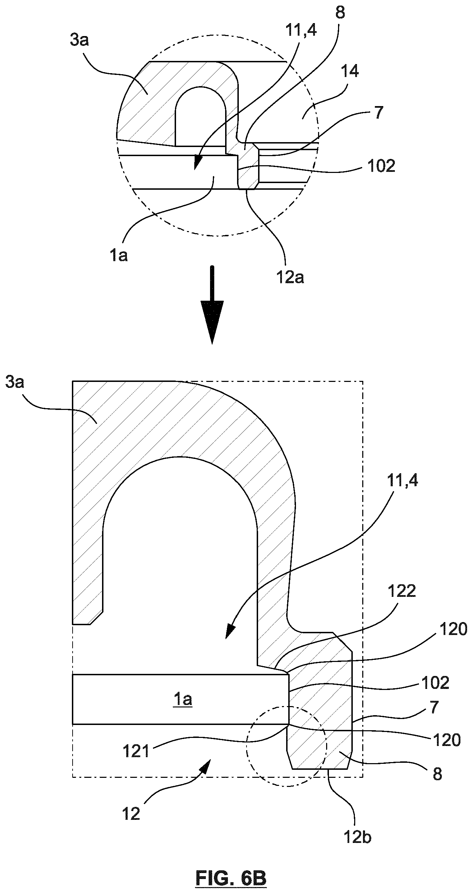

Die erfindungsgemäße Klemmvorrichtung 10, umfasst dabei Folgendes: ein Gehäuse 3 umfassend erste und zweite erfindungsgemäße Gehäuseteile 3a, 3b, wie weiter unten im Zusammenhang von Figuren 6A und 6B beschrieben, wobei die beiden Gehäuseteile 3a, 3b derart zueinander angeordnet und miteinander befestigt sind, dass Aussparungen der ersten und zweiten Gehäuseteile 3a, 3b zusammen einen Innenraum 13 innerhalb des Gehäuses 3 bilden; eine in dem Innenraum 13 angeordnete Feder 1 umfassend eine erste ringförmige Federplatte 1a und eine zweite ringförmige Federplatte 1b, wobei die Federplatten 1a, 1b derart innerhalb des Innenraums 13 angeordnet sind, dass in dem Innenraum 13 mindestens ein Druckraum 2, 4 gebildet wird, der zumindest teilweise durch die Federplatten 1a, 1b begrenzt wird, wobei der Druckraum 2, 4 (mittels einer Öffnung I, II und ggf. Verbindung zu einer Druckluftpumpe 6) be- oder entlüftbar ist und mit Überdruck eines dem Gehäuse 3 zuführbaren Druckmediums beaufschlagbar ist, wobei die erste Federplatte 1a derart zwischen der ersten Anlagefläche 101 des ersten Gehäuseteils 3a und der zweiten Anlagefläche 102 des ersten Gehäuseteils 3a eingeklemmt ist, dass ein erstes Ende der ersten Federplatte 1a durch das erste Einrastmittel 110 des ersten Gehäuseteils 3a eingerastet ist und ein zweites Ende der ersten Federplatte 1a durch das zweite Einrastmittel 120 des ersten Gehäuseteils 3a eingerastet ist; wobei die zweite Federplatte 1b derart zwischen der ersten Anlagefläche 101 des zweiten Gehäuseteils 3b und der zweiten Anlagefläche 102 des zweiten Gehäuseteils 3b eingeklemmt ist, dass ein erstes Ende der zweiten Federplatte 1b durch das erste Einrastmittel 110 des zweiten Gehäuseteils 3b eingerastet ist und ein zweites Ende der zweiten Federplatte 1b durch das zweite Einrastmittel 120 des zweiten Gehäuseteils 3b eingerastet ist, und wobei die Federplatten 1a, 1b derart relativ zu den mindestens einen Druckraum 2, 4 angeordnet sind, dass durch Be- oder Entlüften des Druckraums 2, 4 oder Beaufschlagung des Druckraum 2, 4 mit Überdruck, eine Biegung mindestens einer der Federplatten 1a, 1b veränderbar ist und dadurch die Vorrichtung 10 zwischen einem geöffneten Zustand, in dem das Objekt 5 nicht von einer bzw. irgendeiner der Klemmflächen 7 berührt wird sondern von den Klemmflächen 7 beabstandet ist, und einem geschlossenen Zustand, in dem ein oder mehrere der Klemmflächen 7 eine Klemm- und/oder Bremskraft auf das Objekt 5 übertragen, wechselt. Beispielsweise kann die Vorrichtung 10 dabei von dem geschlossenen Zustand in den geöffneten Zustand wechseln oder umgekehrt.

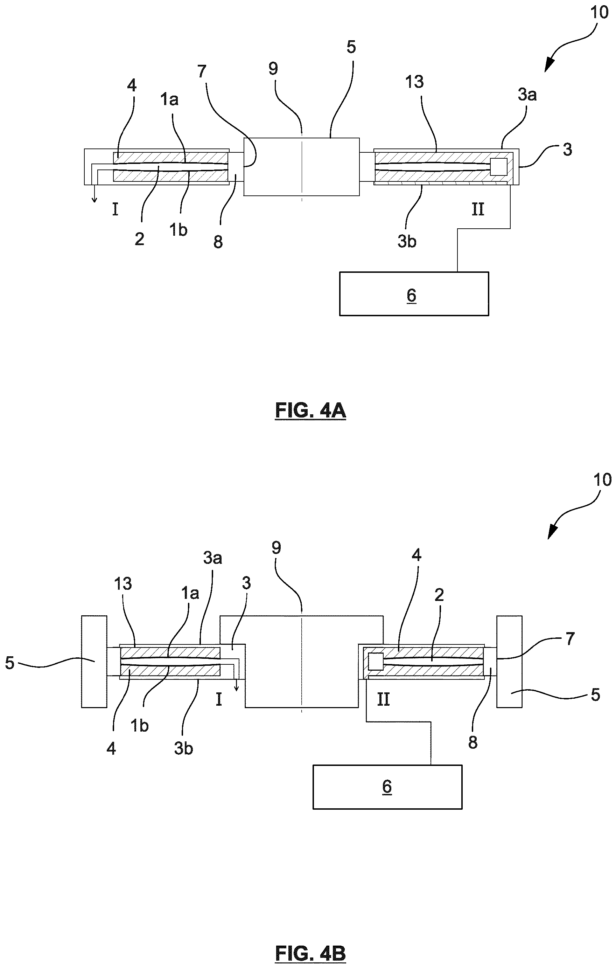

Die Figuren 1A, 1B, 4A und 4B zeigen jeweils solche Klemmvorrichtungen 10 im geschlossenen Zustand indem die Klemmfläche 7 des Klemmelements 8 den Umfang des Objekts 5 berührt. Das Klemmelement 8 wird auch als Klemmlippe bezeichnet. Das Klemmelement 8 kann einstückig mit den Übrigen Teilen des Gehäuseteils 3a, 3b ausgebildet sein oder kann ein von den übrigen Teilen strukturell separiertes Bauteil des Gehäuseteils 3a, 3b sein.

Die Klemmkraft bzw. -wirkung der Klemmfläche 7 auf das zu klemmende Objekt 5 erfolgt in einer Klemmebene, die durch zwei Vektoren aufgespannt wird, die jeweils einen Radius der ringförmigen Federplatten 1a, 1b bzw. ringförmigen Aussparung 11 bilden (vgl. Fig. 5A). Die Achse 9 kann als Hauptachse der Klemmvorrichtung 10 bezeichnet werden, die senkrecht zur Klemmebene verläuft. Die Klemmvorrichtung 10 kann um diese Hauptachse 9 rotationssymmetrisch ausgestaltet sein. Die Hauptachse 9 kann in etwa oder genau mittig durch eine Öffnung der Klemmvorrichtung 10 verlaufen (Öffnung 14 in Fig. 5B). In den Figuren 1A, 4A ist das zu klemmende Objekt 5, beispielsweise eine rotierbare Welle einer Maschine oder eines Tischs, innerhalb der Öffnung 14 platziert und die Klemmkraft der Klemmvorrichtung ist deshalb innerhalb der Klemmebene radial nach innen zur Hauptachse 9 hin (senkrecht zur Hauptachse 9) gerichtet. In Figuren 1B, 4B ist das zu klemmende Objekt 5 außerhalb der Klemmvorrichtung 10 platziert und die Klemmkraft der Klemmvorrichtung ist deshalb innerhalb der Klemmebene radial nach außen von der Hauptachse 9 weg (senkrecht zur Hauptachse 9) gerichtet.

In Fig. 1A, 2A, 3A, 4A befindet sich das Klemmelement 8 zwischen Feder 1 und Öffnung 14 bzw. Hauptachse 9. In Fig. 1B, 2B, 3B, 4B hingegen umgibt das zu klemmende Objekt 5 zumindest teilweise die Klemmvorrichtung 10, sodass sich dort das Klemmelement 8 zwischen Objekt 5 und Öffnung 14 bzw. Hauptachse 9 befindet. In Fig. 1B, 2B, 3B, 4B kann in Öffnung 14 statt dem zu klemmenden Objekt 5 ein die Öffnung 14 zumindest teilweise füllendes Bauteil eingebracht sein, durch das sich die Hauptachse 9 erstreckt.

In Figuren 1A bis 5A ist jeweils die Feder 1 zwischen zwei Anlageflächen (101 und 102 in Fig. 5C und 5D) innerhalb des Gehäuses 3 der Klemmvorrichtungen 10 eingeklemmt und erstreckt sich zwischen den beiden Anlageflächen. Im drucklosen Ausgangszustand der Vorrichtung 10 in den Figuren 1A bis 2B kann die Feder 1 leicht gebogen sein, um in diesem Zustand fest im Gehäuse 3 fixiert zu sein und dasselbe kann für jeden anderen Zustand der Vorrichtung 10 gelten, wobei der Grad der Biegung der Feder 1 davon abhängt, in welchem Zustand sich die Vorrichtung 10 befindet. Ist die Vorrichtung 10 in einem Zustand, in dem die Feder 1 gebogen ist (z.B. stärker gebogen als im drucklosen Ausgangszustand, wie etwa im geöffneten Zustand), kann Entlüften eines inneren Druckraums 2 der Feder 1 und Belüftung eines äußeren Druckraums 4 zum zumindest teilweisen Entspannen der Feder 1 führen während die Feder 1 an die radialen Anlageflächen drückt, deren Abstand sich etwas vergrößert, so dass dadurch das Gehäuse 3 im Bereich des Klemmelements 8 bzw. der Klemmfläche 7 elastisch verformt wird und die Klemmfläche 7 dadurch das Objekt 5 berührt und mit einer (vordefinierten) Klemmkraft gegen das Objekt 5 gedrückt wird, um das Objekt 5 festzuklemmen. Das Objekt 5 ist festgeklemmt und die Klemmvorrichtung 10 ist im geschlossenen Zustand, wie in Figuren 1A und 1B gezeigt. Im geschlossenen Zustand der Vorrichtung 10 kann die Feder 1 auch nach der teilweisen Entspannung immer noch leicht gebogen sein, um in diesem Zustand fest im Gehäuse 3 fixiert zu sein.

Das Klemmelement 8 kann dabei ein elastisches Element, wie etwa eine Federgabel, sein, das im drucklosen Ausgangszustand der Vorrichtung 10 durch die Federkraft der (leicht) verbogenen Feder 1 aus einer Ausgangsposition, in der das elastische Element entspannt ist, in eine verspannte Position gebracht wird, beispielsweise durch Verbiegen der Federgabel 8, bis im drucklosen Ausgangszustand ein Gleichgewicht zwischen einer Rückstellkraft des elastischen Elements 8 und der Federkraft der Feder 1 entsteht. Bei diesem Gleichgewicht kann die Klemmfläche 7 gegen das Objekt 5 drücken.

Durch zusätzliche Beaufschlagung des äußeren Druckraums 4 im geschlossenen Zustand mit Druckluft (beispielsweise mit 4 bar oder 6 bar) besteht die optionale Möglichkeit die Klemmkraft um einen vorbestimmten Wert zu erhöhen. Dies ist in den Figuren 1A, 1B durch die optionale zusätzliche Druckluftpumpe (Booster) 6 und die Schraffierung (Druckluft) im äußeren Druckraum 4 angedeutet. Der äußere Druckraum 4 kann mittels einer Öffnung im Gehäuse 3 mit einem Luftanschluss 11 (auch als "Close" bezeichnet) verbunden sein, an dem die Druckluftpumpe 6 angeschlossen sein kann.

Hierdurch ist z.B. ein Ansteuern der Vorrichtung 10 derart möglich, dass ein Wechsel zwischen einer (im drucklosen Zustand) gebremsten Bewegung des beaufschlagten Objekts 5 und einem vollständigen Klemmen des Objekts (bei einer ausreichenden Druckbeaufschlagung) erfolgt.

Auch wenn hier beispielhaft zwei Druckräume 2, 4 gezeigt und beschrieben sind, so ist die Klemmvorrichtung 10 auch mit einem einzigen Druckraum betreibbar, der beispielsweise der innere Druckraum 2 oder der äußere Druckraum 4 sein kann.

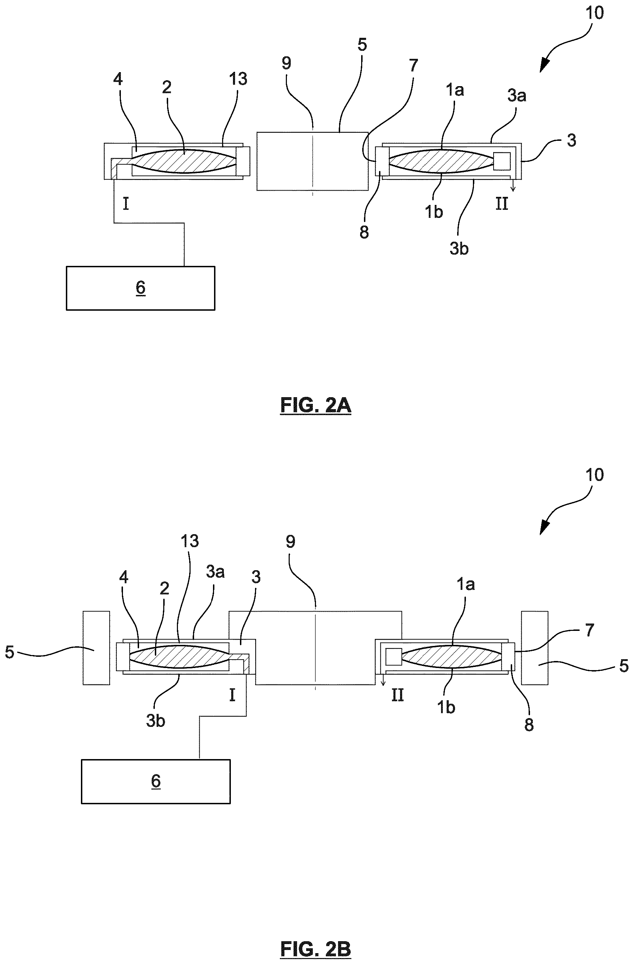

Figuren 2A und 2B zeigen die Klemmvorrichtungen 10 aus den Figuren 1A und 1B jeweils im geöffneten Zustand in dem die Klemmfläche 7 den Umfang des Objekts 5 nicht berührt bzw. von dem Umfang des Objekts 5 beabstandet ist. Der innere Druckraum 2 kann mittels einer Öffnung im Gehäuse 3 mit einem Luftanschluss I (auch als "Open" bezeichnet) verbunden sein, an dem eine Druckluftpumpe 6 angeschlossen sein kann.

Durch Beaufschlagung des inneren Druckraums 2 durch die Druckluftpumpe 6 mit Druckluft (beispielsweise 4 bar oder 6 bar) und Entlüften des äußeren Druckraums 4 wird die Feder 1, verglichen mit dem geschlossenen Zustand aus Fig. 1A, 1B, stärker (konvex) verbogenen bzw. verspannt und es kommt zu einer radialen Verkürzung der Feder 1 bzw. des Abstandes zwischen den beiden Anlageflächen. Die Klemmfläche 7 hebt von dem Objekt 5 ab, um die Klemmung aufzuheben. Das Objekt 5 ist frei beweglich (z.B. um Achse 9 rotierbar oder linear entlang Achse 9 beweglich) und die Klemmvorrichtung 10 ist geöffnet.

Zwischen dem geschlossenen Zustand und dem geöffneten Zustand der Vorrichtung 10 kann hin- und her gewechselt werden.

Solche pneumatischen Klemmen 10 haben gegenüber hydraulischen Klemmen einer Reihe von Vorteilen.

Durch die Verwendung der Kombination aus elastischer Komponente, hier eine Feder 1 samt Federplatten 1a, 1b, und Druckluft werden beispielsweise sehr kurze Reaktionszeiten beim Umschalten zwischen dem geöffneten und geschlossenen Zustand erreicht und ebenso eine sichere Klemmung des Objekts 5 bewirkt. Die Feder 1 kann bevorzugt plattenförmig ausgestaltet sein, wie in Fig. 5 näher gezeigt, wobei zwei aufeinanderliegende Federplatten 1a, 1b die Feder 1 und den innere Druckraum 2 der Feder 1 zwischen den Platten 1a, 1b bilden. Die Platten 1a, 1b können ebenfalls ringförmig sein, wie in Fig. 5 gezeigt, und können optional zusätzlich radiale Schlitze aufweisen, so dass eine Veränderung des Innendurchmessers mit besonders geringen Kräften möglich ist. Die Federplatten 1a, 1b können, zumindest im Bereich von Schlitzen, mit Gummi beschichtet sein, um die für die Druckluft nötige Dichtheit herzustellen. Die Federplatten 1a, 1b können auch vollständig mit Gummi ummantelt sein. Die Federplatten 1a, 1b sind generell so druckfest und so elastisch biegbar ausgebildet und in dem Gehäuse 3 der Klemmvorrichtung 10 derart angeordnet, dass innerhalb der Feder 1 zwischen den Federplatten 1a, 1b der innere Druckraum 2 gebildet wird und zwischen einer jeden Federplatte 1a, 1b und dem Gehäuse 3 bzw. den Gehäuseteilen 3a, 3b der Klemmvorrichtung 10 der äußere Druckraum 4 gebildet wird. Figur 5 zeigt eine dreidimensionale Ansicht einer Klemmvorrichtung 10 ähnlich zu Figuren 1A und 2A.

Durch Belüften oder Beaufschlagen mit Druckluft des äußeren Druckraums 4 und Entlüften des inneren Druckraums 2, wie in Fig. 1A gezeigt, wird die Feder 1 zumindest teilweise entspannt und bewirkt eine Klemmkraft auf das zu klemmende Objekt 5, insbesondere auf den Umfang einer Welle 5. Dadurch wird bei Energie- bzw. Druckausfall das Objekt 5 geklemmt bzw. die Welle 5 sofort zum Stillstand gebracht und bietet deshalb eine Sicherheitsklemmung. Solche pneumatischen Klemmen 10 können je nach Größe Haltemomente von mehreren 100 Nm und bis zu mehreren 1000 Nm erzielen, die durch zusätzliches Beaufschlagen des äußeren Druckraums 4 mit Druckluft, wie in Fig. 1A durch eine Druckpumpe 6 (Booster) angedeutet, noch erhöht werden können. Hier genügt eine Druckluft von wenigen bar (beispielsweise 4 bar oder 6 bar) für eine Bereitstellung eines Mehrfachen der Haltemomente, die ohne Booster erreicht werden. Dabei wird die Tatsache genutzt, dass geringe transversale Verbiegungen der Platten 1a, 1b (senkrecht zu deren Längsachse) beim Umschalten zwischen geöffneten und geschlossenen Zustand der Klemme 10 große Federkräfte erzeugen, die zum Klemmen oder zum Lösen vorgespannter Klemmvorrichtungen 10 genutzt werden können. Somit wird ein sicheres Klemmen und Lösen auch von sich schnell drehenden Maschinenwellen 5 ermöglicht.

Auch sind bei Pneumatikmaterial die Kosten und der Montageaufwand im Vergleich zur Hydraulikmaterial niedriger und es entsteht durch Verwendung von Druckluft keinerlei Mehraufwand zur Herstellung von Sauberkeit an der Anlage. Auch ermöglichen solche pneumatischen Klemmen eine geringe Baugröße, da eine geringe transversale Verbiegung und eine geringe (Änderungen der) longitudinale Ausdehnung der Feder, und dadurch geringe Volumina der Druckräume, genügen, um die erforderlichen Klemmkräfte aufzubringen.

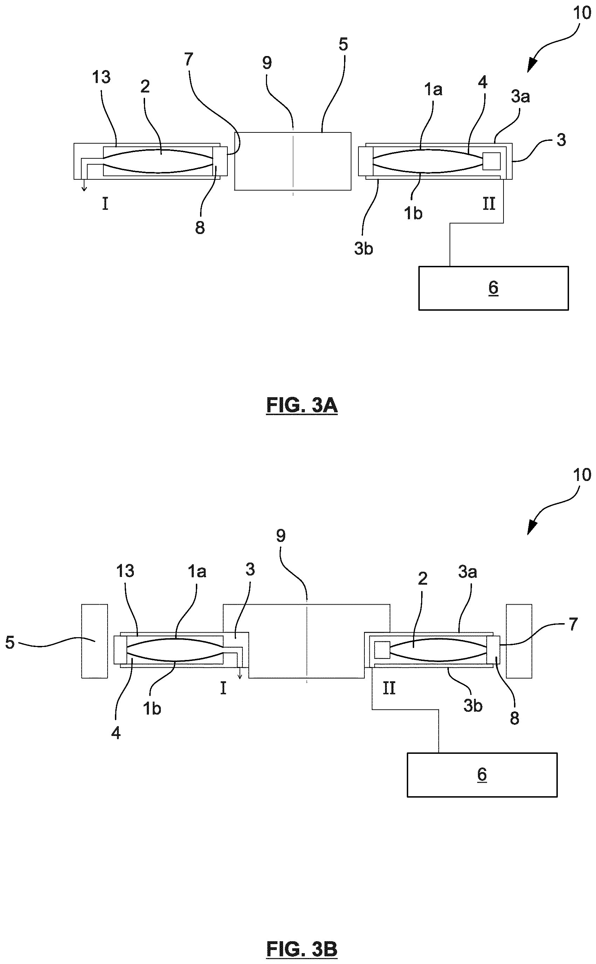

Bei pneumatischen Klemmen unterscheidet man prinzipiell zwischen passiven Klemmvorrichtungen 10, wie in Fig. 1A bis 2B gezeigt, und aktiven Klemmvorrichtungen 10, wie in Fig. 3A bis 4B gezeigt.

Die Feder 1 kann im drucklosen Ausgangszustand unterschiedlich stark (transversal) verbogen sein und damit unterschiedlich stark radial verkürzt sein. Die Innenseite des Gehäuses 3 kann an die Verbiegung der Federplatten 1a, 1b angepasst sein oder diese definieren. Eine entsprechende Anschlagsfläche für die Federplatten 1a, 1b kann beispielsweise durch eine Gehäuseinnenwandung gebildet werden. Die Gehäuseinnenwandung kann komplementär (z.B. konkav) zu einer (z.B. konvexen) Verbiegung der Federplatten 1a, 1b ausgebildet sein.

Bei passiven Klemmvorrichtungen 10 wird im drucklosen Ausgangszustand die Feder 1 in der Regel leicht elastisch (z.B. konvex) verbogen bzw. ist vorgespannt und die Klemmvorrichtungen 10 kann geschlossen sein (Fig. 1A, 1B). Die Klemmvorrichtung 10 wird nur durch Krafteinwirkung von Innen über Beaufschlagung des inneren Druckraums 2 mit Druckluft geöffnet (Fig. 2A, 2B). Meist ist die Feder 1 im drucklosen Ausgangszustand etwas verbogen, so dass diese im Klemmfall oder im Fall von Druckabfall die durch die in der Feder 1 gespeicherte Energie gegebene Federkraft auf das zu klemmende Objekt 5 als Klemmkraft übertragen wird, um das Objekt 5 zu klemmen.

Bei aktiven Klemmvorrichtungen 10 wird im drucklosen Ausgangszustand (Fig. 3A, 3B) die Feder 1 stärker, insbesondere stärker konvex, transversal nach außen gekrümmt als bei passiven Klemmvorrichtungen, so dass sich der Abstand zwischen den beiden radialen Anlageflächen verkürzt und die Klemmvorrichtung 10 geöffnet ist. Es wird keine Klemmkraft über Klemmfläche 7 auf das Objekt 5 bewirkt. Das Objekt ist frei, da die Klemmfläche 7 das Objekt 5 nicht berührt bzw. von dem Objekt 5 beabstandet ist.

Durch plastische Verformung der Federplatten 1a, 1b kann die Feder 1 bei gleichem Gehäuse 3 im drucklosen Ausgangszustand stärker transversal nach außen gekrümmt und damit stärker radial verkürzt sein, als bei passiven Klemmvorrichtungen. Diese geringere radiale Ausdehnung der Federplatten 1a, 1b im drucklosen Ausgangszustand kann zu einem geöffneten Zustand der Klemmvorrichtung 10 im drucklosen Ausgangszustand führen. Auch bei plastischer Verformung sind die Federplatten 1a, 1b elastisch gebogen und drücken gegen die Anlageflächen damit die Feder im Gehäuse fixiert ist. Der Innenraum des Gehäuses bzw. die Aussparungen können die durch plastische Verformung stärker bewirkte Krümmung im Ausgangszustand aufnehmen.

Die Klemmkraft muss nun aktiv von außen induziert werden, wie in Fig. 4A und 4B gezeigt, um die Klemme in den geschlossenen Zustand zu überführen. Hier wird durch eine Druckluftpumpe 6 Druckluft in den äußeren Druckraum 4 eingebracht und somit die Feder 1 derart von außen mit Druckluft beaufschlagt, dass die Feder 1 aktiv entspannt wird, sich die Krümmung der Feder 1 reduziert, sich der Abstand zwischen den beiden Anlageflächen vergrößert, und sich das Gehäuse 3 im Bereich des Klemmelements 8 bzw. der Klemmfläche 7 elastisch verformt, sodass die Klemmfläche 7 das Objekt 5 berührt und eine Klemmkraft auf das Objekt 5 bewirkt und das Objekt 5 dadurch festgeklemmt wird. Die aktive Klemmvorrichtung 10 ist dann im geschlossenen Zustand.

Je nach Anwendungsgebiet und vorgeschriebenen Sicherheitsbestimmungen wird daher auf ein Aktiv- oder Passivklemmsystem 10 zurückgegriffen. Ist primär eine Sicherheitsklemmung gewünscht, wird in der Regel eine passive Klemmvorrichtung verwendet. Mit solchen pneumatischen Passivklemmsystemen ist es möglich, bereits im drucklosen Zustand bei einer entsprechenden Montage der Vorrichtung in einer Gesamtvorrichtung eine vorbestimmte Klemmkraft zu erzeugen, mit welcher das zu klemmende Objekt 5 beaufschlagt wird. Durch die Beaufschlagung mit Überdruck oder Unterdruck können die auf dieses Objekt übertragenen Kräfte erhöht, reduziert oder ganz aufgehoben werden, was vielfältige Anwendungen eröffnet. Soll hingegen mit der Klemmvorrichtung primär ein bewusster Arbeitsvorgang, wie ein Werkzeugwechsel, durchgeführt werden, wird in der Regel eine aktive Klemmvorrichtung verwendet.

Wie in Figur 5A dargestellt, umfasst das Gehäuse 3 der erfindungsgemäßen Klemmvorrichtungen 10 zwei erfindungsgemäße Gehäuseteile 3a, 3b, die mit Befestigungsmittel, wie etwa Schrauben, miteinander befestigt und so montiert sind, dass im montierten Zustand die beiden Gehäuseteile 3a, 3b einen Innenraum 13 zwischen den Gehäuseteilen 3a, 3b innerhalb des Gehäuses 3 definieren in dem die Feder 1 samt deren ringförmiger Federplatten 1a, 1b angeordnet sind. Die Gehäuseteile 3a, 3b definieren jeweils eine Aussparung 11, die ebenfalls ringförmig ist und die der Aufnahme der ringförmigen Federplatten 1a, 1b dienen, wie in Figuren 5A, 5B dargestellt. Zumindest ein Teil der ersten Anlagefläche 101 kann (im Wesentlichen) senkrecht zur radialen Richtung R der ringförmigen Aussparung 11 verlaufen und/oder ein Teil der zweiten Anlagefläche 102 kann (im Wesentlichen senkrecht) zur radialen Richtung R der ringförmigen Aussparung 11 verlaufen.

Durch die Mitte des Gehäuses 3 hindurch erstreckt sich eine Öffnung 14 (Fg. 5B) in die das zu klemmende Objekt 5, wie etwa eine Welle, eingeführt werden kann. Das Gehäuse kann sich bis zu 360° um diese Öffnung herum erstrecken und umschließt zumindest teilweise das Objekt 5 in zumindest einer Ebene die als Klemmebene bezeichnet wird. Die zentrale Hauptachse 9 der Klemmvorrichtungen verläuft mittig durch die Öffnung 14 und senkrecht zu der Klemmebene. In Klemmvorrichtungen nach Fig. 1A, 2A, 3A, 4A, 5A verläuft die Hauptachse 9 mittig durch die Welle entlang deren Längsachse.

Entlang des Umfangs des Gehäuses 3 oder der Öffnung 14 befindet sich eine oder mehrere der Klemmflächen 7 welche im Falle einer elastischen Verformung des Gehäuses 3 im Bereich des Klemmelements 8 oder der Klemmfläche 7 die Klemmkraft auf den äußeren Umfang des Objekts 5 bewirkt und dadurch das Objekt 5 klemmen kann. Für eine wirksame Öffnung und Schließung der Klemmvorrichtung 10 im Bezug auf das zu klemmende Objekt 5, ohne Gefahr der Beschädigung des Objekts 5, ist eine symmetrische Verteilung der Klemmkraft entlang der Klemmfläche 7 bzw. entlang des Umfangs des Objekts 5 wünschenswert. Eine nicht symmetrische Verteilung der Klemmkraft kann zu Beschädigungen des Objekts 5 führen. Vorzugsweise sind eine oder beide Anlageflächen 101, 102 innerhalb der Klemmebene kreisförmig ausgestaltet. Vorzugsweise ist die Klemmfläche 7 innerhalb der Klemmebene kreisförmig ausgestaltet. Das Klemmelement 8 kann ringförmig ausgestaltet sein. Alle hierin beschriebenen ring- oder kreisförmigen Bauteile können jeweils einzeln oder in Kombination als Mittelpunkt den Schnittpunkt der Hauptachse 9 mit der Klemmebene aufweisen (z.B. Mittelpunkt der Öffnung 14).

Figur 5B zeigt eines der beiden Gehäuseteile 3a (hier das obere Gehäuseteil 3a aus Fig. 5A), sowie eine der beiden Federplatten 1a, 1b der Feder 1. Die dargestellte Federplatte 1a der Feder 1 erstreckt sich von einer ersten Anlageflächen 101 innerhalb des Gehäuseteils 3a bis zu einer zweiten Anlagefläche 102 innerhalb des Gehäuseteils 3a und kann diese berühren. Die erste Anlagefläche 101 ist dabei vom Mittelpunkt der Öffnung 14 ausgesehen radial weiter außerhalb angeordnet als die zweite Anlagefläche 102.

Figur 5C zeigt den Abschnitt des in Figur 5B dargestellten Gehäuseteils 3a in dem die obere Platte 1a der Feder 1 auf die erste Anlagefläche 101 trifft und mit dieser vorzugsweise in Berührung steht. Figur 5D zeigt den Abschnitt des in Figur 5B dargestellten Gehäuseteils 3a in dem die obere Platte 1a der Feder 1 auf die zweite Anlagefläche 102 trifft und mit dieser vorzugsweise in Berührung steht. Es ist jedoch auch möglich, dass sich radial zwischen der Federplatte 1a und ein oder mehreren der Anlageflächen 101, 102 jeweils ein oder mehrere weitere Komponenten befinden, über die die Federplatte 1a ihre Federkraft auf die Anlageflächen 101, 102 ausübt.

Das in den Figuren 5B bis 5D dargestellte Gehäuseteil 3a hat dabei die bisher im Stand der Technik verwendete Form. Wie in Figuren 5B, 5D ersichtlich, sind die Innenseiten des Gehäuseteils 3a zwischen denen die Federplatte 1a in der Aussparung eingeklemmt wird geradlinig bzw. eben ausgestaltet. Jede der Platten der Feder 1 wird in Richtung der Hauptachse 9 der Klemmvorrichtungen 10 durch die Öffnung 12 in die Aussparung 11 des jeweils dazugehörigen Gehäuseteils bei der Montage an geradlinigen bzw. ebenen Innenflächen des Gehäuseteils 3a entlang eingeführt, bis die jeweilige Platte am Ende jeder der beiden Anlageflächen 101, 102 an einen Anschlag 112, 122 stößt und deshalb nicht weiter in die Aussparung 11 eingeführt werden kann. Da die Ausdehnung der Federplatte 1a in der Klemmebene bzw. in radialer Richtung der ringförmigen Aussparung größer ist als die Ausdehnung des durch das Gehäuseteil definierten Innenraums wird die Platte 1a im drucklosen Ausgangszustand verbogen bzw. vorgespannt.

Es hat sich aber gezeigt, dass die Platten 1a, 1b der Feder 1 bei der Montage in Abhängigkeit von der axialen Einpresskraft positioniert sind und somit nicht immer gleich in den Gehäuseteilen 3a, 3b axial positioniert sind. Die Federplatten 1a, 1b können verkippen, unterschiedlich tief in die Gehäuseteile eingebracht werden oder sich unterschiedlich stark verbiegen. Durch die Variation der Positionierung der Platten 1a, 1b innerhalb der Gehäuseteile ergibt sich durch deren maßgeblicher Bedeutung für die Öffnungs- und Schließfunktion der Klemmvorrichtungen 10 eine Variation dieser Funktionen, insbesondere eine Asymmetrie bei der Verteilung der Klemmkraft entlang der Klemmfläche bzw. des Umfangs der Öffnung innerhalb der Klemmebene, was nachteilig für eine effektive und nachhaltige Klemmwirkung und ein unversehrtes Objekt ist.

In den unteren Zeichnungen der Figuren 6A und 6B werden erfindungsgemäße Gehäuseteile 3a, 3b im Vergleich zu den konventionellen Gehäuseteilen nach Figuren 5C, 5D dargestellt, wobei Letztere nochmals in den oberen Zeichnungen der Figuren 6A und 6B zum Vergleich dargestellt sind.

Das erfindungsgemäße Gehäuseteil 3a, 3b umfasst: eine ringförmige Aussparung 11 zum Einklemmen einer ringförmigen Federplatte 1a, 1b zwischen einer durch die Aussparung 11 definierten ersten Anlagefläche 101 des Gehäuseteils 3a, 3b und einer durch die Aussparung 11 definierten zweiten Anlagefläche 102 des Gehäuseteils 3a, 3b; ein Klemmelement 8 mit einer Klemmfläche 7, die ausgelegt ist, wenn die Federplatte 1a, 1b derart in der Aussparung 11 zwischen der ersten Anlagefläche 101 und der zweiten Anlagefläche 102 eingeklemmt ist, dass sich ein erstes Ende der Federplatte 1a, 1b an der ersten Anlagefläche 101 abstützt, sich die Federplatte 1a, 1b von der ersten Anlagefläche 101 bis zu der zweiten Anlagefläche 102 erstreckt, und ein zweites Ende der Federplatte 1a, 1b auf die zweite Anlagefläche 102 drückt, eine Klemm- und/oder Bremskraft auf ein zu klemmendes und/oder zu bremsendes Objekt 5 zu übertragen; wobei das Gehäuseteil 3a, 3b ein erstes Einrastmittel 110 und ein zweites Einrastmittel 120 umfasst, wobei, wenn die Federplatte 1a, 1b in der Aussparung 11 zwischen der ersten Anlagefläche 101 und der zweiten Anlagefläche 102 eingeklemmt ist, das erste Einrastmittel 110 ausgelegt ist, das erste Ende der Federplatte 1a, 1b an der ersten Anlagefläche 101 einzurasten und das zweite Einrastmittel 120 ausgelegt ist, das zweite Ende der Federplatte 1a, 1b an der zweiten Anlagefläche 102 einzurasten.

Wie in der unteren Zeichnung von Figur 6A dargestellt, wird als Teil des ersten Einrastmittels erfindungsgemäß und bevorzugt ein Vorsprung 111 bereitgestellt, der die erste Anlagefläche 101 begrenzt. Beim Einführen der Platte 1a entlang einer Richtung parallel zu der Hauptachse 9 in das Gehäuseteil 3a muss somit das erste Ende der Federplatte 1a zwar diesen Vorsprung 111 überwinden, was jedoch dazu führt, dass nach Überwindung dieses Vorsprungs 111 die Platte 1a zwischen dem Anschlag 112 und dem Vorsprung 111 in Richtung der Hauptachse 9 definiert angeordnet ist. Die Platte 1a rastet zwischen Anschlag 112 und Vorsprung 111 im Bereich der ersten Anlagefläche 101 ein und kann diese bevorzugt dort berühren. Der Vorsprung 111 kann stufen- oder rampenförmig sein oder eine andere Form aufweisen, die diese Funktion des Vorsprungs bereitstellt. Gleiches gilt analog für die im unteren Bild der Figur 6B dargestellten erfindungsgemäße zweiten Anlagefläche 102, die ebenfalls bevorzugt durch einen Vorsprung 121 begrenzt wird, den das zweite Ende der Federplatte 1a beim Einführen entlang einer Richtung parallel zu Hauptachse 9 überwinden muss, bevor die Platte 1a zwischen dem Anschlag 122 und dem Vorsprung 121 auf definierte Art und Weise positioniert ist und dort im Bereich der zweiten Anlagefläche 102 einrastet. Das zweite Ende der Federplatte 1a kann die zweite Anlagefläche 102 bevorzugt während der Einrastung berühren. Der Vorsprung 121 kann stufen- oder rampenförmig sein oder eine andere Form aufweisen, die diese Funktion des Vorsprungs 121 bereitstellt.

Wie aus den Figuren 1A bis 6B ersichtlich, sind der erste Vorsprung 111 und der erste Anschlag weiter von dem zu klemmenden Objekt 5 entfernt, als der zweite Vorsprung 121 und der zweite Anschlag 122, und zwar unabhängig davon, ob die Klemmkraft nach innen (Fig. 1A, 2A) oder nach außen (Fig. 1B, 2B) wirkt. Erster Vorsprung 111 und erster Anschlag 112 können dem Klemmelement 8 im Gehäuseteil 3a, 3b gegenüber angeordnet sein, während zweiter Vorsprung 121 und zweiter Anschlag 122 im Bereich des Klemmelements 8 angeordnet sind bzw. Teil des Klemmelements 8 sein können. Der erste Anschlag 112 kann eine längere Ausdehnung in radialer Richtung R der ringförmigen Aussparung 11 haben als der erste Vorsprung 111 (Fig. 6A, 5B). Der erste Vorsprung 111 kann um 0,025 mm bis 0,15 mm, bevorzugt 0,05 mm bis 0,1 mm, besonders bevorzugt um 0,1 mm, in einer radialen Richtung R der ringförmigen Aussparung 11 von der bzw. in Bezug auf die erste(n) Anlagefläche 101 (z.B. in die Aussparung 11 hinein) vor- bzw. abstehen.

Der zweite Anschlag 122 kann eine längere Ausdehnung in radialer Richtung R der ringförmigen Aussparung 11 haben als der zweite Vorsprung 121 (Fig. 6B, 5B). Der zweite Vorsprung 121 kann um 0,025 mm bis 0,15 mm, bevorzugt 0,05 mm bis 0,1 mm, besonders bevorzugt um 0,05 mm, in einer radialen Richtung R der ringförmigen Aussparung 11 von der bzw. in Bezug auf die zweite(n) Anlagefläche 102 (z.B. in die Aussparung 11 hinein) vor- bzw. abstehen.

Die ringförmige Aussparung 11 kann eine ringförmige Öffnung 12 im Gehäuseteil 3a, 3b (in der Klemmebene) definieren, wobei die ringförmige Öffnung 12 zwischen einem ersten ringförmigen Rand 12a des Gehäuseteils und einem zweiten ringförmigen Rand 12b des Gehäuseteils gebildet ist, und wobei die ringförmige Öffnung 12 der Einführung der Federplatte 1a in die Aussparung 11 dient. Der erste Vorsprung 111 kann zwischen dem ersten ringförmigen Rand 12a und der ersten Anlagefläche 101 an einer Innenseite des Gehäuseteils 3a im Bereich der Aussparung 11 angeordnet sein und in die Aussparung 11 hineinragen. Der zweite Vorsprung 121 kann zwischen dem zweiten ringförmigen Rand 12b und der zweiten Anlagefläche 102 an einer Innenseite des Gehäuseteils im Bereich der Aussparung 11 angeordnet sein und in die Aussparung 11 hineinragen (Fig. 6A, 6B).

Vorsprung 111 und Anschlag 112 können eine Nut im Gehäuseteil 3a definieren, in die das erste Ende der Federplatte 1a einrasten kann, wobei die erste Anlagefläche 101 einen Teil der Nut bilden kann. Vorsprung 121 und Anschlag 122 können eine Nut im Gehäuseteil 3a definieren, in die das zweite Ende der Federplatte 1a einrasten kann, wobei die zweite Anlagefläche 102 einen Teil der Nut bilden kann.

Der Abstand zwischen der Stufe oder Rampe des ersten Vorsprungs 111 und erstem Rand 12a kann 1 mm bis 1,8 mm, 1,1 mm bis 1,5 mm, vorzugsweise 1,2 mm oder 1,1 mm betragen. Der Abstand zwischen der Stufe oder Rampe des zweitem Vorsprung 121 und dem zweitem Rand 12b kann 1 mm bis 1,8 mm, 1,1 mm bis 1,5 mm, vorzugsweise 1,2 mm oder 1,1 mm betragen.

Der Abstand zwischen erstem Vorsprung 111 und erstem Anschlag 112 und der Abstand zwischen zweitem Vorsprung 121 und zweitem Anschlag 122 kann jeweils 1 mm bis 1,5 mm, 1,1 mm bis 1,4 mm, vorzugsweise 1,2 mm betragen.

Durch die Schaffung der Einrastmittel 110, 120, bevorzugt mittels Vorsprüngen 111, 121 ggf. in Kombination mit den optionalen Anschlägen 112, 122, in den Bereichen der beiden Anlageflächen 101, 102 wird für die Federplatte 1a, 1a eine (insbesondere axiale) Zwangsposition geschaffen. Durch diese Zwangspositionierung wird die Federplatte 1a, 1b stabil gelagert, insbesondere in Richtung parallel zur Hauptachse 9 der Klemmvorrichtung 10 axial definiert positioniert, und die Position der Federplatte 1a, 1b ist deshalb nicht mehr maßgeblich in Abhängigkeit von der axialen Einpresskraft innerhalb der Gehäuseteile 3a, 3b positioniert. Durch die (axial) eindeutig definierte Lage jeder der Federplatten 1a, 1b der Feder 1 wird auch die Krümmung der Federplatten 1a, 1b wohldefiniert und wie gewünscht im drucklosen Zustand ausgestaltet.

Durch die Einrastmittel 110, 120 können die beiden Federbleche 1a, 1b in der Klemmvorrichtung 10 auch mit einem wohl definierten gleichmäßigen Abstand zueinander innerhalb des Gehäuses 3 angeordnet werden. Die Federplatten 1a, 1b können durch die Einrastmittel 110, 120 mit ihren Längsachsen parallel zur Klemmebene positioniert werden. Der durch die Einrastmittel 110, 120 erzielte symmetrische Funktionsaufbau erzeugt symmetrische Spannungen der Feder 1 über den gesamten Umfang der Öffnung 14 und führt somit zu einer sehr effektiven Klemmkraftverteilung gleichmäßig um das Objekt 5 herum in der Klemmebene.

Die Öffnungs- und Schließfunktionen können durch die Einrastmittel 110, 120 somit über den Umfang der Öffnung 14 symmetrisch und verlässlich erfolgen. Mögliche ungewollte radiale oder axiale Bewegungen des Gehäuses 3 führen somit nicht zu ungewollten axialen oder radialen geometrischen Verlagerungen an der Klemmfläche 7.

Die Erfinder haben ferner herausgefunden, dass durch diese Einrastmittel 110, 120, insbesondere durch die Vorsprünge 111, 121, neben einer axial wohldefinierten und symmetrischen Positionierung der Platten 1a, 1b der Feder 1 innerhalb des Gehäuses zusätzlich auch eine verbesserte Dichtwirkung zwischen den Federplatten 1a, 1b und zwischen eines jeden der beiden Gehäuseteile 3a, 3b mit der dazugehörigen Platte 1a, 1b der Feder 1 erzielt wird. Diese verbesserten Dichtungswirkungen sind insbesondere bei der zusätzlichen Beaufschlagung mit Druckluft in den inneren und äußeren Druckräumen 2, 4 zur Überführung der Klemmvorrichtungen in einen anderen der beiden beschriebenen Zustände von besonderem Vorteil. Die Einrastmittel 110, 120, insbesondere die Vorsprünge 111, 121, bewirken einen im Hinblick auf die Dichtwirkung verbesserten Kontakt zwischen der Gummierungen der Platten 1a, 1b und der Gummierung einer jeden Platte 1a, 1b mit dem jeweiligen Gehäuseteil 3a, 3b.

Die Erfinder haben weitere zusätzliche Vorteile durch die Schaffung der Einrastmittel 110, 120, insbesondere der Vorsprünge 111, 121, identifiziert. So erlaubt die definierte Lage der gummierten Federplatten 1a, 1b über die Anpassung der Gummidicken um die Federplatten gezielte Hubbegrenzungen der Platten als Schutz vor Fehlanwendungen (z.B. Nulldurchgang) mit zu hohem Betriebsdruck (insb. bei Booster) einzubauen und ebenso wird dadurch der Luftbedarf (Volumen) an Druckluft reduziert und als Folge die Öffnungs- und Schließgeschwindigkeiten der Klemmvorrichtung 10 erhöht.

In der Beschreibung und in den Figuren sind bevorzugte Ausführungsformen der durch die folgenden Ansprüche beanspruchten Erfindung beschrieben. Die in der vorstehenden Beschreibung, den Ansprüchen und den Zeichnungen offenbarten optionalen Merkmale können sowohl einzeln als auch in beliebiger Kombination für die Ausführung der hier gemäß der beiliegenden Ansprüche beanspruchten Erfindung in ihren verschiedenen Ausgestaltungen Verwendung finden.

## Patentansprüche

1. Ein Gehäuseteil (3a, 3b) für eine pneumatische Klemm- und/oder Bremsvorrichtung (10), das Gehäuseteil (3a, 3b) umfassend:
eine ringförmige Aussparung (11) zum Einklemmen einer ringförmigen Federplatte (1a, 1b) zwischen einer durch die Aussparung (11) definierten ersten Anlagefläche (101) des Gehäuseteils (3a, 3b) und einer durch die Aussparung (11) definierten zweiten Anlagefläche (102) des Gehäuseteils (3a, 3b);
ein Klemmelement (8) mit einer Klemmfläche (7), die ausgelegt ist, wenn die Federplatte (1a, 1b) derart in der Aussparung (11) zwischen der ersten Anlagefläche (101) und der zweiten Anlagefläche (102) eingeklemmt ist, dass sich ein erstes Ende der Federplatte (1a, 1b) an der ersten Anlagefläche (101) abstützt, sich die Federplatte (1a, 1b) von der ersten Anlagefläche (101) bis zu der zweiten Anlagefläche (102) erstreckt, und ein zweites Ende der Federplatte (1a, 1b) auf die zweite Anlagefläche (102) drückt, eine Klemm- und/oder Bremskraft auf ein zu klemmendes und/oder zu bremsendes Objekt (5) zu übertragen;
**dadurch gekennzeichnet, dass**
das Gehäuseteil (3a, 3b) ein erstes Einrastmittel (110) und ein zweites Einrastmittel (120) umfasst, wobei, wenn die Federplatte (1a, 1b) in der Aussparung (11) zwischen der ersten Anlagefläche (101) und der zweiten Anlagefläche (102) eingeklemmt ist, das erste Einrastmittel (110) ausgelegt ist, das erste Ende der Federplatte (1a, 1b) an der ersten Anlagefläche (101) einzurasten und das zweite Einrastmittel (120) ausgelegt ist, das zweite Ende der Federplatte (1a, 1b) an der zweiten Anlagefläche (102) einzurasten.

2. Das Gehäuseteil (3a, 3b) nach Anspruch 1, **dadurch gekennzeichnet, dass** das erste Einrastmittel (110) ausgelegt ist, insbesondere im Betrieb der Klemm- und/oder Bremsvorrichtung (10), das erste Ende der Federplatte (1a, 1b) in einer vordefinierten Position im Bezug auf die erste Auflagefläche (101) zu halten und/oder, dass das zweite Einrastmittel (120) ausgelegt ist, insbesondere im Betrieb der Klemm- und/oder Bremsvorrichtung (10), das zweite Ende der Federplatte (1a, 1b) in einer vordefinierten Position im Bezug auf die zweite Auflagefläche (102) zu halten.

3. Das Gehäuseteil (3a, 3b) nach irgendeinem der vorangehenden Ansprüche, **dadurch gekennzeichnet, dass** das Gehäuseteil (3a, 3b) derart ausgelegt ist, dass, wenn das zweite Ende der Federplatte (1a, 1b) auf die zweite Anlagefläche (102) drückt, sich das Gehäuseteil (3a, 3b) im Bereich des Klemmelements elastisch verformt und dadurch die Klemmfläche (7) die Klemm- und/oder Bremskraft auf das zu klemmende und/oder zu bremsende Objekt (5) überträgt.

4. Das Gehäuseteil (3a, 3b) nach irgendeinem der vorangehenden Ansprüche, **dadurch gekennzeichnet, dass** das erste Einrastmittel (110) einen ersten Vorsprung (111) und einen ersten Anschlag (112) umfasst, die jeweils die erste Anlagefläche (101) derart begrenzen, dass das erste Einrastmittel (110) ausgelegt ist, das erste Ende der Federplatte (1a, 1b) zwischen dem ersten Vorsprung (111) und dem ersten Anschlag (112) im Bereich der ersten Anlagefläche (101) einzurasten.

5. Das Gehäuseteil (3a, 3b) nach irgendeinem der vorangehenden Ansprüche, **dadurch gekennzeichnet, dass** das zweite Einrastmittel (120) einen zweiten Vorsprung (121) und einen zweiten Anschlag (122) umfasst, die jeweils die zweite Anlagefläche (102) derart begrenzen, dass das zweite Einrastmittel (120) ausgelegt ist, das zweite Ende der Federplatte (1a, 1b) zwischen dem zweiten Vorsprung (121) und dem zweiten Anschlag (122) im Bereich der zweiten Anlagefläche (102) einzurasten.

6. Das Gehäuseteil (3a, 3b) nach irgendeinem der vorangehenden Ansprüche 4 bis 5, **dadurch gekennzeichnet, dass** der erste Vorsprungs (111) eine Stufe oder Rampe umfasst und/oder, dass der zweite Vorsprung (121) eine Stufe oder Rampe umfasst.

7. Das Gehäuseteil (3a, 3b) nach irgendeinem der vorangehenden Ansprüche 4 bis 6, **dadurch gekennzeichnet, dass** der erste Vorsprung (111) und der erste Anschlag (112) derart im Bereich der Aussparung (11) angeordnet und dimensioniert sind, dass bei Einbringen der Federplatte (1a, 1b) von Außen in die Aussparung (11) hinein, und nach Passieren des ersten Vorsprungs (111) durch das erste Ende der Federplatte (1a, 1b), der erste Anschlag (112) ein Hindernis gegen ein tieferes Einbringen des ersten Endes der Federplatte (1a, 1b) in die Aussparung (11) hinein bildet.

8. Das Gehäuseteil (3a, 3b) nach irgendeinem der vorangehenden Ansprüche 4 bis 7, **dadurch gekennzeichnet, dass** der zweite Vorsprung (121) und der zweite Anschlag (122) derart im Bereich der Aussparung (11) angeordnet und dimensioniert sind, dass bei Einbringen der Federplatte (1a, 1b) von Außen in die Aussparung (11) hinein, und nach Passieren des zweiten Vorsprungs (121) durch das zweite Ende der Federplatte (1a, 1b), der zweite Anschlag (122) ein Hindernis gegen ein tieferes Einbringen des zweiten Endes der Federplatte (1a, 1b) in die Aussparung (11) hinein bildet.

9. Das Gehäuseteil (3a, 3b) nach irgendeinem der vorangehenden Ansprüche 4 bis 8, **dadurch gekennzeichnet, dass** der erste Anschlag (112) eine längere Ausdehnung in radialer Richtung (R) der ringförmigen Aussparung (11) hat als der erste Vorsprung (111) und/oder, dass der zweite Anschlag (122) eine längere Ausdehnung in radialer Richtung (R) der ringförmigen Aussparung (11) hat als der zweite Vorsprung (121).

10. Das Gehäuseteil (3a, 3b) nach irgendeinem der vorangehenden Ansprüche 4 bis 9, **dadurch gekennzeichnet, dass** der erste Vorsprung (111) um 0,025 mm bis 0,15 mm, bevorzugt 0,05 mm bis 0,1 mm, besonders bevorzugt um etwa 0,1 mm gegenüber der ersten Anlagefläche (101) in einer radialen Richtung (R) der ringförmigen Aussparung (11) in die Aussparung (11) hinein vorsteht und/oder der zweite Vorsprung (121) um 0,025 mm bis 0,15 mm, bevorzugt 0,05 mm bis 0,1 mm, besonders bevorzugt um etwa 0,05 mm gegenüber der zweiten Anlagefläche (101) in einer radialen Richtung (R) der ringförmigen Aussparung (11) in die Aussparung (11) hinein vorsteht.

11. Das Gehäuseteil (3a, 3b) nach irgendeinem der vorangehenden Ansprüche, **dadurch gekennzeichnet, dass** die ringförmige Aussparung (11) eine ringförmige Öffnung (12) im Gehäuseteil (3a, 3b) definiert, wobei die ringförmige Öffnung (12) zwischen einem ersten ringförmigen Rand (12a) des Gehäuseteils und einem zweiten ringförmigen Rand (12b) des Gehäuseteils gebildet ist.

12. Das Gehäuseteil (3a, 3b) nach Anspruch 11, **dadurch gekennzeichnet, dass** der erste Vorsprung (111) zwischen dem ersten ringförmigen Rand (12a) und der ersten Anlagefläche (101) auf einer Innenseite des Gehäuseteils (3a, 3b) im Bereich der Aussparung (11) angeordnet ist, wobei der erste Vorsprung (111) vorzugsweise in einem Abstand von 1 mm bis 1,8 mm, bevorzugt 1,1 mm bis 1,5 mm, besonders bevorzugt etwa 1,2 mm von dem ersten ringförmigen Rand (12a) auf der Innenseite des Gehäuseteils (3a, 3b) im Bereich der Aussparung (11) angeordnet ist.

13. Das Gehäuseteil (3a, 3b) nach Anspruch 11 oder 12, **dadurch gekennzeichnet, dass** der zweite Vorsprung (121) zwischen dem zweiten ringförmigen Rand (12b) und der zweiten Anlagefläche (102) an einer Innenseite des Gehäuseteils (3a, 3b) im Bereich der Aussparung (11) angeordnet ist, wobei der zweite Vorsprung (121) vorzugsweise in einem Abstand von 1 mm bis 1,8 mm, bevorzugt 1,1 mm bis 1,5 mm, besonders bevorzugt etwa 1,2 mm von dem zweiten ringförmigen Rand (12b) auf der Innenseite des Gehäuseteils (3a, 3b) im Bereich der Aussparung (11) angeordnet ist.

14. Das Gehäuseteil (3a, 3b) nach irgendeinem der vorangehenden Ansprüche, wobei die zweite Anlagefläche (102) und die Klemmfläche (7) aufeinander gegenüberliegenden Seitenflächen des Klemmelements (8) angeordnet sind.

15. Eine Klemm- und/oder Bremsvorrichtung (10) zum Klemmen und/oder Bremsen eines zu klemmenden und/oder bremsenden Objekts (5), umfassend:
ein Gehäuse (3) umfassend ein erstes Gehäuseteil (3a) nach irgendeinem der vorangehenden Ansprüche und ein zweites Gehäuseteil (3b) nach irgendeinem der vorangehenden Ansprüche, wobei die beiden Gehäuseteile (3a, 3b) derart zueinander angeordnet und miteinander befestigt sind, dass die Aussparungen (11) der ersten und zweiten Gehäuseteile (3a, 3b) zusammen einen Innenraum (13) innerhalb des Gehäuses (3) bilden;
eine in dem Innenraum (13) angeordnete Feder (1) umfassend eine erste ringförmige Federplatte (1a) und eine zweite ringförmige Federplatte (1b), wobei die Federplatten (1a, 1b) derart innerhalb des Innenraums (13) angeordnet sind, dass in dem Innenraum (13) mindestens ein Druckraum (2, 4) gebildet wird, der zumindest teilweise durch die Federplatten (1a, 1b) begrenzt wird, wobei der Druckraum (2, 4) be- oder entlüftbar ist und mit Überdruck eines dem Gehäuse (3) zuführbaren Druckmediums beaufschlagbar ist,
wobei die erste Federplatte (1a) derart zwischen der ersten Anlagefläche (101) des ersten Gehäuseteils (3a) und der zweiten Anlagefläche (102) des ersten Gehäuseteils (3a) eingeklemmt ist, dass ein erstes Ende der ersten Federplatte (1a) durch das erste Einrastmittel (110) des ersten Gehäuseteils (3a) eingerastet ist und ein zweites Ende der ersten Federplatte (1a) durch das zweite Einrastmittel (120) des ersten Gehäuseteils (3a) eingerastet ist;
wobei die zweite Federplatte (1b) derart zwischen der ersten Anlagefläche (101) des zweiten Gehäuseteils (3b) und der zweiten Anlagefläche (102) des zweiten Gehäuseteils (3b) eingeklemmt ist, dass ein erstes Ende der zweiten Federplatte (1b) durch das erste Einrastmittel (110) des zweiten Gehäuseteils (3b) eingerastet ist und ein zweites Ende der zweiten Federplatte (1b) durch das zweite Einrastmittel (120) des zweiten Gehäuseteils (3b) eingerastet ist; und
wobei die Federplatten (1a, 1b) derart relativ zu den mindestens einen Druckraum (2, 4) angeordnet sind, dass durch Be- oder Entlüften des Druckraums (2, 4) oder Beaufschlagung des Druckraum (2, 4) mit Überdruck, eine Biegung mindestens einer der Federplatten (1a, 1b) veränderbar ist und dadurch die Vorrichtung (10) zwischen einem geöffneten Zustand, in dem das Objekt (5) von den Klemmflächen (7) beabstandet ist, und einem geschlossenen Zustand, in dem ein oder mehrere der Klemmflächen (7) eine Klemm- und/oder Bremskraft auf das Objekt (5) übertragen, wechselt.

16. Die Klemm- und/oder Bremsvorrichtung (10) nach Anspruch 15, wobei der mindestens eine Druckraum einen ersten Druckraum (4) umfasst, der außerhalb der Feder (1) zwischen mindestens einer der Federplatten (1a, 1b) und dem Gehäuse (3) angeordnet ist.

17. Die Klemm- und/oder Bremsvorrichtung (10) nach Anspruch 16, wobei die erste Federplatte (1a) ausgelegt ist, durch das Belüften des ersten Druckraums (4) oder durch das Beaufschlagen des ersten Druckraum (4) mit Überdruck, ihre Biegung zu reduzieren um, bei Aufstützen des ersten Endes der ersten Federplatte (1a) an der ersten Anlagefläche (101) des ersten Gehäuseteils (3a), mit dem zweiten Ende der ersten Federplatte (1a) auf die zweite Anlagefläche (102) des ersten Gehäuseteils (3a) derart zu drücken, dass dadurch eine Übertragung einer Klemm- und/oder Bremskraft von der Klemmfläche (7) des Klemmelements (8) des ersten Gehäuseteils (3a) auf das zu klemmende und/oder bremsende Objekt (5) bewirkt wird und die Vorrichtung (10) von dem geöffneten Zustand in den geschlossenen Zustand wechselt.

18. Die Klemm- und/oder Bremsvorrichtung (10) nach Anspruch 16 oder 17, wobei die zweite Federplatte (1b) ausgelegt ist, durch das Belüften des ersten Druckraums (4) oder durch das Beaufschlagen des ersten Druckraum (2, 4) mit Überdruck, ihre Biegung zu reduzieren um, bei Aufstützen des ersten Endes der zweiten Federplatte (1b) an der ersten Anlagefläche (101) des zweiten Gehäuseteils (3b), mit dem zweiten Ende der zweiten Federplatte (1b) auf die zweite Anlagefläche (102) des zweiten Gehäuseteils (3a) derart zu drücken, dass dadurch eine Übertragung einer Klemm- und/oder Bremskraft von der Klemmfläche (7) des Klemmelements (8) des zweiten Gehäuseteils (3a) auf das zu klemmende und/oder bremsende Objekt (5) bewirkt wird und die Vorrichtung (10) von dem geöffneten Zustand in den geschlossenen Zustand wechselt.

19. Die Klemm- und/oder Bremsvorrichtung (10) nach Anspruch 16, 17 oder 18, wobei die Vorrichtung (10) derart ausgelegt ist, dass durch das Belüften des ersten Druckraums (4) oder durch das Beaufschlagendes ersten Druckraums (4) mit Überdruck, sich die erste Anlagefläche (101) und die zweite Anlagefläche (102) zumindest einer der beiden Gehäuseteile (3a, 3b) voneinander wegbewegen und/oder sich die Biegung mindestens einer der Federplatten (1a, 1b) verringert, und dadurch die Vorrichtung (10) von dem geöffneten Zustand in den geschlossenen Zustand wechselt.

20. Die Klemm- und/oder Bremsvorrichtung (10) nach irgendeinem der Ansprüche 15 bis 19, wobei der mindestens eine Druckraum einen zweiten Druckraum (2) umfasst, wobei der zweite Druckraum (2) innerhalb der Feder (1) zwischen den beiden Federplatten (1a, 1b) angeordnet ist, vorzugsweise wobei die Vorrichtung (10) derart ausgelegt ist, dass durch das Belüften des zweiten Druckraums (2) oder durch das Beaufschlagen des zweiten Druckraums (2) mit Überdruck, sich die erste Anlagefläche (101) und die zweite Anlagefläche (102) zumindest einer der beiden Gehäuseteile (3a, 3b) aufeinander zu bewegen und/oder sich die Biegung mindestens einer der Federplatten (1a, 1b) vergrößert, und dadurch die Vorrichtung (10) von dem geschlossenen Zustand in den geöffneten Zustand wechselt.

## Claims

1. A housing part (3a, 3b) for a pneumatic clamping and/or braking device (10), the housing part (3a, 3b) comprising:
an annular recess (11) for clamping an annular spring plate (1a, 1b) between a first contact surface (101) of the housing part (3a, 3b) defined by the recess (11) and a second contact surface (102) of the housing part (3a, 3b) defined by the recess (11);
a clamping element (8) having a clamping surface (7) which is designed, when the spring plate (1a, 1b) is clamped in the recess (11) between the first contact surface (101) and the second contact surface (102) in such a way that a first end of the spring plate (1a, 1b) is supported on the first contact surface (101), the spring plate (1a, 1b) extends from the first contact surface (101) to the second contact surface (102), and a second end of the spring plate (1a, 1b) presses on the second contact surface (102), to transmit a clamping and/or braking force to an object (5) to be clamped and/or braked;
**characterised in that**
the housing part (3a, 3b) comprises a first latching means (110) and a second latching means (120), wherein, when the spring plate (1a, 1b) is clamped in the recess (11) between the first contact surface (101) and the second contact surface (102), the first latching means (110) is designed to latch the first end of the spring plate (1a, 1b) on the first contact surface (101) and the second latching means (120) is designed to latch the second end of the spring plate (1a, 1b) on the second contact surface (102).

2. The housing part (3a, 3b) according to claim 1, **characterised in that** the first latching means (110) is designed, in particular during operation of the clamping and/or braking device (10), to hold the first end of the spring plate (1a, 1b) in a predefined position with respect to the first contact surface (101) and/or **in that** the second latching means (120) is designed, in particular during operation of the clamping and/or braking device (10), to hold the second end of the spring plate (1a, 1b) in a predefined position with respect to the second contact surface (102).

3. The housing part (3a, 3b) according to any one of the preceding claims, **characterised in that** the housing part (3a, 3b) is designed in such a way that, when the second end of the spring plate (1a, 1b) presses on the second contact surface (102), the housing part (3a, 3b) deforms elastically in the region of the clamping element and thereby the clamping surface (7) transmits the clamping and/or braking force to the object (5) to be clamped and/or braked.

4. The housing part (3a, 3b) according to any one of the preceding claims, **characterised in that** the first latching means (110) comprises a first projection (111) and a first stop (112), which each delimit the first contact surface (101) in such a way that the first latching means (110) is designed to latch the first end of the spring plate (1a, 1b) between the first projection (111) and the first stop (112) in the region of the first contact surface (101).

5. The housing part (3a, 3b) according to any one of the preceding claims, **characterised in that** the second latching means (120) comprises a second projection (121) and a second stop (122), which each delimit the second contact surface (102) in such a way that the second latching means (120) is designed to latch the second end of the spring plate (1a, 1b) between the second projection (121) and the second stop (122) in the region of the second contact surface (102).

6. The housing part (3a, 3b) according to any one of the preceding claims 4 to 5, **characterised in that** the first projection (111) comprises a step or ramp and/or **in that** the second projection (121) comprises a step or ramp.

7. The housing part (3a, 3b) according to any one of the preceding claims 4 to 6, **characterised in that** the first projection (111) and the first stop (112) are arranged and dimensioned in the region of the recess (11) in such a way that, when the spring plate (1a, 1b) is introduced from the outside into the recess (11) and after the first end of the spring plate (1a, 1b) has passed the first projection (111), the first stop (112) forms an obstacle to a deeper introduction of the first end of the spring plate (1a, 1b) into the recess (11).

8. The housing part (3a, 3b) according to any one of the preceding claims 4 to 7, **characterised in that** the second projection (121) and the second stop (122) are arranged and dimensioned in the region of the recess (11) in such a way that, when the spring plate (1a, 1b) is introduced from the outside into the recess (11) and after the second end of the spring plate (1a, 1b) has passed the second projection (121), the second stop (122) forms an obstacle to a deeper introduction of the second end of the spring plate (1a, 1b) into the recess (11).

9. The housing part (3a, 3b) according to any one of the preceding claims 4 to 8, **characterised in that** the first stop (112) has a longer extent in the radial direction (R) of the annular recess (11) than the first projection (111) and/or **in that** the second stop (122) has a longer extent in the radial direction (R) of the annular recess (11) than the second projection (121).

10. The housing part (3a, 3b) according to any one of the preceding claims 4 to 9, **characterised in that** the first projection (111) projects into the recess (11) by 0.025 mm to 0.15 mm, preferably 0.05 mm to 0.1 mm, particularly preferably by approximately 0.1 mm, with respect to the first contact surface (101) in a radial direction (R) of the annular recess (11) and/or the second projection (121) projects into the recess (11) by 0.025 mm to 0.15 mm, preferably 0.05 mm to 0.1 mm, particularly preferably by approximately 0.05 mm, with respect to the second contact surface (101) in a radial direction (R) of the annular recess (11).

11. The housing part (3a, 3b) according to any one of the preceding claims, **characterised in that** the annular recess (11) defines an annular opening (12) in the housing part (3a, 3b), wherein the annular opening (12) is formed between a first annular edge (12a) of the housing part and a second annular edge (12b) of the housing part.

12. The housing part (3a, 3b) according to claim 11, **characterised in that** the first projection (111) is arranged between the first annular edge (12a) and the first contact surface (101) on an inner side of the housing part (3a, 3b) in the region of the recess (11), wherein the first projection (111) is preferably arranged at a distance of 1 mm to 1.8 mm, preferably 1.1 mm to 1.5 mm, particularly preferably approximately 1.2 mm, from the first annular edge (12a) on the inner side of the housing part (3a, 3b) in the region of the recess (11).

13. The housing part (3a, 3b) according to claim 11 or 12, **characterised in that** the second projection (121) is arranged between the second annular edge (12b) and the second contact surface (102) on an inner side of the housing part (3a, 3b) in the region of the recess (11), wherein the second projection (121) is preferably arranged at a distance of 1 mm to 1.8 mm, preferably 1.1 mm to 1.5 mm, particularly preferably approximately 1.2 mm, from the second annular edge (12b) on the inner side of the housing part (3a, 3b) in the region of the recess (11).

14. The housing part (3a, 3b) according to any one of the preceding claims, wherein the second contact surface (102) and the clamping surface (7) are arranged on mutually opposite side surfaces of the clamping element (8).

15. A clamping and/or braking device (10) for clamping and/or braking an object (5) to be clamped and/or braked, comprising:
a housing (3) comprising a first housing part (3a) according to any one of the preceding claims and a second housing part (3b) according to any one of the preceding claims, wherein the two housing parts (3a, 3b) are arranged and fastened with respect to one another such that the recesses (11) of the first and second housing parts (3a, 3b) together form an inner space (13) within the housing (3);
a spring (1) arranged in the inner space (13), comprising a first annular spring plate (1a) and a second annular spring plate (1b), wherein the spring plates (1a, 1b) are arranged within the inner space (13) such that at least one pressure space (2, 4) is formed in the inner space (13), which pressure space is at least partially delimited by the spring plates (1a, 1b), wherein the pressure space (2, 4) is aeratable or deaeratable and can be acted on by positive pressure of a pressure medium which is suppliable to the housing (3),
wherein the first spring plate (1a) is clamped between the first contact surface (101) of the first housing part (3a) and the second contact surface (102) of the first housing part (3a) such that a first end of the first spring plate (1a) is latched by the first latching means (110) of the first housing part (3a) and a second end of the first spring plate (1a) is latched by the second latching means (120) of the first housing part (3a);
wherein the second spring plate (1b) is clamped between the first contact surface (101) of the second housing part (3b) and the second contact surface (102) of the second housing part (3b) such that a first end of the second spring plate (1b) is latched by the first latching means (110) of the second housing part (3b) and a second end of the second spring plate (1b) is latched by the second latching means (120) of the second housing part (3b); and
wherein the spring plates (1a, 1b) are arranged relative to the at least one pressure space (2, 4) such that by aerating or deaerating the pressure space (2, 4) or acting on the pressure space (2, 4) with positive pressure, a bending of at least one of the spring plates (1a, 1b) is changeable and thereby the device (10) changes between an open state, in which the object (5) is spaced apart from the clamping surfaces (7), and a closed state, in which one or more of the clamping surfaces (7) transmit a clamping and/or braking force to the object (5).

16. The clamping and/or braking device (10) according to claim 15, wherein the at least one pressure space comprises a first pressure space (4) which is arranged outside the spring (1) between at least one of the spring plates (1a, 1b) and the housing (3).

17. The clamping and/or braking device (10) according to claim 16, wherein the first spring plate (1a) is designed, by aerating the first pressure space (4) or by acting on the first pressure space (4) with positive pressure, to reduce its bending in order, when the first end of the first spring plate (1a) is supported on the first contact surface (101) of the first housing part (3a), to press with the second end of the first spring plate (1a) onto the second contact surface (102) of the first housing part (3a) such that thereby a transmission of a clamping and/or braking force from the clamping surface (7) of the clamping element (8) of the first housing part (3a) to the object (5) to be clamped and/or braked is effected and the device (10) changes from the open state to the closed state.

18. The clamping and/or braking device (10) according to claim 16 or 17, wherein the second spring plate (1b) is designed, by aerating the first pressure space (4) or by acting on the first pressure space (2, 4) with positive pressure, to reduce its bending in order, when the first end of the second spring plate (1b) is supported on the first contact surface (101) of the second housing part (3b), to press with the second end of the second spring plate (1b) onto the second contact surface (102) of the second housing part (3a) such that thereby a transmission of a clamping and/or braking force from the clamping surface (7) of the clamping element (8) of the second housing part (3a) to the object (5) to be clamped and/or braked is effected and the device (10) changes from the open state to the closed state.

19. The clamping and/or braking device (10) according to claim 16, 17 or 18, wherein the device (10) is designed such that by aerating the first pressure space (4) or by acting on the first pressure space (4) with positive pressure, the first contact surface (101) and the second contact surface (102) of at least one of the two housing parts (3a, 3b) move away from one another and/or the bending of at least one of the spring plates (1a, 1b) is reduced, and thereby the device (10) changes from the open state to the closed state.

20. The clamping and/or braking device (10) according to any one of claims 15 to 19, wherein the at least one pressure space comprises a second pressure space (2), wherein the second pressure space (2) is arranged within the spring (1) between the two spring plates (1a, 1b), preferably wherein the device (10) is designed such that by aerating the second pressure space (2) or by acting on the second pressure space (2) with positive pressure, the first contact surface (101) and the second contact surface (102) of at least one of the two housing parts (3a, 3b) move towards one another and/or the bending of at least one of the spring plates (1a, 1b) is increased, and thereby the device (10) changes from the closed state to the open state.

## Revendications

1. Élément de boîtier (3a, 3b) pour un dispositif de serrage et/ou de freinage pneumatique (10), l'élément de boîtier (3a, 3b) comprenant:
un évidement annulaire (11) pour serrer une plaque de ressort annulaire (1a, 1b) entre une première surface d'appui (101) de l'élément de boîtier (3a, 3b) définie par l'évidement (11) et une deuxième surface d'appui (102) de l'élément de boîtier (3a, 3b) définie par l'évidement (11);
un élément de serrage (8) avec une surface de serrage (7), qui est conçu, lorsque la plaque de ressort (1a, 1b) est serrée dans l'évidement (11) entre la première surface d'appui (101) et la deuxième surface d'appui (102) de telle sorte qu'une première extrémité de la plaque de ressort (1a, 1b) s'appuie sur la première surface d'appui (101), la plaque de ressort (1a, 1b) s'étend de la première surface d'appui (101) jusqu'à la deuxième surface d'appui (102), et une deuxième extrémité de la plaque de ressort (1a, 1b) appuie sur la deuxième surface d'appui (102), pour transmettre une force de serrage et/ou de freinage à un objet (5) à serrer et/ou à freiner;
**caractérisé en ce que**
l'élément de boîtier (3a, 3b) comprend un premier moyen d'encliquetage (110) et un deuxième moyen d'encliquetage (120), dans lequel, lorsque la plaque de ressort (1a, 1b) est serrée dans l'évidement (11) entre la première surface d'appui (101) et la deuxième surface d'appui (102), le premier moyen d'encliquetage (110) est conçu pour encliqueter la première extrémité de la plaque de ressort (1a, 1b) sur la première surface d'appui (101) et le deuxième moyen d'encliquetage (120) est conçu pour encliqueter la deuxième extrémité de la plaque de ressort (1a, 1b) sur la deuxième surface d'appui (102).

2. L'élément de boîtier (3a, 3b) selon la revendication 1, **caractérisé en ce que** le premier moyen d'encliquetage (110) est conçu, en particulier pendant le fonctionnement du dispositif de serrage et/ou de freinage (10), pour maintenir la première extrémité de la plaque de ressort (1a, 1b) dans une position prédéfinie par rapport à la première surface d'appui (101) et/ou **en ce que** le deuxième moyen d'encliquetage (120) est conçu, en particulier pendant le fonctionnement du dispositif de serrage et/ou de freinage (10), pour maintenir la deuxième extrémité de la plaque de ressort (1a, 1b) dans une position prédéfinie par rapport à la deuxième surface d'appui (102).

3. L'élément de boîtier (3a, 3b) selon l'une quelconque des revendications précédentes, **caractérisé en ce que** l'élément de boîtier (3a, 3b) est conçu de telle sorte que, lorsque la deuxième extrémité de la plaque de ressort (1a, 1b) appuie sur la deuxième surface d'appui (102), l'élément de boîtier (3a, 3b) se déforme élastiquement dans la région de l'élément de serrage et ainsi la surface de serrage (7) transmet la force de serrage et/ou de freinage à l'objet (5) à serrer et/ou à freiner.

4. L'élément de boîtier (3a, 3b) selon l'une quelconque des revendications précédentes, **caractérisé en ce que** le premier moyen d'encliquetage (110) comprend une première saillie (111) et un premier arrêt (112) qui délimitent respectivement la première surface d'appui (101) de telle sorte que le premier moyen d'encliquetage (110) est conçu pour encliqueter la première extrémité de la plaque de ressort (1a, 1b) entre la première saillie (111) et le premier arrêt (112) dans la région de la première surface d'appui (101).

5. L'élément de boîtier (3a, 3b) selon l'une quelconque des revendications précédentes, **caractérisé en ce que** le deuxième moyen d'encliquetage (120) comprend une deuxième saillie (121) et un deuxième arrêt (122) qui délimitent respectivement la deuxième surface d'appui (102) de telle sorte que le deuxième moyen d'encliquetage (120) est conçu pour encliqueter la deuxième extrémité de la plaque de ressort (1a, 1b) entre la deuxième saillie (121) et le deuxième arrêt (122) dans la région de la deuxième surface d'appui (102).

6. L'élément de boîtier (3a, 3b) selon l'une quelconque des revendications précédentes 4 à 5, **caractérisé en ce que** la première saillie (111) comprend un gradin ou une rampe et/ou **en ce que** la deuxième saillie (121) comprend un gradin ou une rampe.

7. L'élément de boîtier (3a, 3b) selon l'une quelconque des revendications précédentes 4 à 6, **caractérisé en ce que** la première saillie (111) et le premier arrêt (112) sont disposés et dimensionnés dans la région de l'évidement (11) de telle sorte que lors de l'introduction de la plaque de ressort (1a, 1b) de l'extérieur dans l'évidement (11), et après le passage de la première saillie (111) à travers la première extrémité de la plaque de ressort (1a, 1b), le premier arrêt (112) forme un obstacle à une introduction plus profonde de la première extrémité de la plaque de ressort (1a, 1b) dans l'évidement (11).

8. L'élément de boîtier (3a, 3b) selon l'une quelconque des revendications précédentes 4 à 7, **caractérisé en ce que** la deuxième saillie (121) et le deuxième arrêt (122) sont disposés et dimensionnés dans la région de l'évidement (11) de telle sorte que lors de l'introduction de la plaque de ressort (1a, 1b) de l'extérieur dans l'évidement (11), et après le passage de la deuxième saillie (121) à travers la deuxième extrémité de la plaque de ressort (1a, 1b), le deuxième arrêt (122) forme un obstacle à une introduction plus profonde de la deuxième extrémité de la plaque de ressort (1a, 1b) dans l'évidement (11).

9. L'élément de boîtier (3a, 3b) selon l'une quelconque des revendications précédentes 4 à 8, **caractérisé en ce que** le premier arrêt (112) a une extension plus longue dans la direction radiale (R) de l'évidement annulaire (11) que la première saillie (111) et/ou **en ce que** le deuxième arrêt (122) a une extension plus longue dans la direction radiale (R) de l'évidement annulaire (11) que la deuxième saillie (121).

10. L'élément de boîtier (3a, 3b) selon l'une quelconque des revendications précédentes 4 à 9, **caractérisé en ce que** la première saillie (111) fait saillie de 0,025 mm à 0,15 mm, de préférence de 0,05 mm à 0,1 mm, de manière particulièrement préférée d'environ 0,1 mm par rapport à la première surface d'appui (101) dans une direction radiale (R) de l'évidement annulaire (11) dans l'évidement (11) et/ou la deuxième saillie (121) fait saillie de 0,025 mm à 0,15 mm, de préférence de 0,05 mm à 0,1 mm, de manière particulièrement préférée d'environ 0,05 mm par rapport à la deuxième surface d'appui (101) dans une direction radiale (R) de l'évidement annulaire (11) dans l'évidement (11).

11. L'élément de boîtier (3a, 3b) selon l'une quelconque des revendications précédentes, **caractérisé en ce que** l'évidement annulaire (11) définit une ouverture annulaire (12) dans l'élément de boîtier (3a, 3b), l'ouverture annulaire (12) étant formée entre un premier bord annulaire (12a) de l'élément de boîtier et un deuxième bord annulaire (12b) de l'élément de boîtier.

12. L'élément de boîtier (3a, 3b) selon la revendication 11, **caractérisé en ce que** la première saillie (111) est disposée entre le premier bord annulaire (12a) et la première surface d'appui (101) sur un côté intérieur de l'élément de boîtier (3a, 3b) dans la région de l'évidement (11), la première saillie (111) étant de préférence disposée à une distance de 1 mm à 1,8 mm, de préférence de 1,1 mm à 1,5 mm, de manière particulièrement préférée d'environ 1,2 mm du premier bord annulaire (12a) sur le côté intérieur de l'élément de boîtier (3a, 3b) dans la région de l'évidement (11).

13. L'élément de boîtier (3a, 3b) selon la revendication 11 ou 12, **caractérisé en ce que** la deuxième saillie (121) est disposée entre le deuxième bord annulaire (12b) et la deuxième surface d'appui (102) sur un côté intérieur de l'élément de boîtier (3a, 3b) dans la région de l'évidement (11), la deuxième saillie (121) étant de préférence disposée à une distance de 1 mm à 1,8 mm, de préférence de 1,1 mm à 1,5 mm, de manière particulièrement préférée d'environ 1,2 mm du deuxième bord annulaire (12b) sur le côté intérieur de l'élément de boîtier (3a, 3b) dans la région de l'évidement (11).

14. L'élément de boîtier (3a, 3b) selon l'une quelconque des revendications précédentes, dans lequel la deuxième surface d'appui (102) et la surface de serrage (7) sont disposées sur des surfaces latérales opposées l'une à l'autre de l'élément de serrage (8).

15. Dispositif de serrage et/ou de freinage (10) pour serrer et/ou freiner un objet (5) à serrer et/ou freiner, comprenant:
un boîtier (3) comprenant un premier élément de boîtier (3a) selon l'une quelconque des revendications précédentes et un deuxième élément de boîtier (3b) selon l'une quelconque des revendications précédentes, les deux éléments de boîtier (3a, 3b) étant disposés l'un par rapport à l'autre et fixés l'un à l'autre de telle sorte que les évidements (11) des premier et deuxième éléments de boîtier (3a, 3b) forment ensemble un espace intérieur (13) à l'intérieur du boîtier (3);
un ressort (1) disposé dans l'espace intérieur (13) comprenant une première plaque de ressort annulaire (1a) et une deuxième plaque de ressort annulaire (1b), les plaques de ressort (1a, 1b) étant disposées à l'intérieur de l'espace intérieur (13) de telle sorte qu'au moins un espace de pression (2, 4) est formé dans l'espace intérieur (13), lequel est délimité au moins en partie par les plaques de ressort (1a, 1b), l'espace de pression (2, 4) pouvant être aéré ou désaéré et pouvant être soumis à une surpression d'un fluide sous pression pouvant être amené au boîtier (3),
dans lequel la première plaque de ressort (1a) est serrée entre la première surface d'appui (101) du premier élément de boîtier (3a) et la deuxième surface d'appui (102) du premier élément de boîtier (3a) de telle sorte qu'une première extrémité de la première plaque de ressort (1a) est encliquetée par le premier moyen d'encliquetage (110) du premier élément de boîtier (3a) et une deuxième extrémité de la première plaque de ressort (1a) est encliquetée par le deuxième moyen d'encliquetage (120) du premier élément de boîtier (3a);
dans lequel la deuxième plaque de ressort (1b) est serrée entre la première surface d'appui (101) du deuxième élément de boîtier (3b) et la deuxième surface d'appui (102) du deuxième élément de boîtier (3b) de telle sorte qu'une première extrémité de la deuxième plaque de ressort (1b) est encliquetée par le premier moyen d'encliquetage (110) du deuxième élément de boîtier (3b) et une deuxième extrémité de la deuxième plaque de ressort (1b) est encliquetée par le deuxième moyen d'encliquetage (120) du deuxième élément de boîtier (3b); et
dans lequel les plaques de ressort (1a, 1b) sont disposées par rapport à l'au moins un espace de pression (2, 4) de telle sorte qu'une flexion d'au moins une des plaques de ressort (1a, 1b) peut être modifiée par aération ou désaérage de l'espace de pression (2, 4) ou la soumission de l'espace de pression (2, 4) avec une surpression, et le dispositif (10) change ainsi entre un état ouvert, dans lequel l'objet (5) est espacé des surfaces de serrage (7), et un état fermé, dans lequel une ou plusieurs des surfaces de serrage (7) transmettent une force de serrage et/ou de freinage à l'objet (5).

16. Dispositif de serrage et/ou de freinage (10) selon la revendication 15, dans lequel l'au moins un espace de pression comprend un premier espace de pression (4) qui est disposé à l'extérieur du ressort (1) entre au moins une des plaques de ressort (1a, 1b) et le boîtier (3).

17. Dispositif de serrage et/ou de freinage (10) selon la revendication 16, dans lequel la première plaque de ressort (1a) est conçue pour réduire sa flexion par aération du premier espace de pression (4) ou par la soumission du premier espace de pression (4) avec une surpression, afin de presser, lors de l'appui de la première extrémité de la première plaque de ressort (1a) sur la première surface d'appui (101) du premier élément de boîtier (3a), avec la deuxième extrémité de la première plaque de ressort (1a) sur la deuxième surface d'appui (102) du premier élément de boîtier (3a) de telle sorte qu'une transmission d'une force de serrage et/ou de freinage de la surface de serrage (7) de l'élément de serrage (8) du premier élément de boîtier (3a) à l'objet (5) à serrer et/ou freiner est ainsi effectuée et le dispositif (10) change de l'état ouvert à l'état fermé.

18. Dispositif de serrage et/ou de freinage (10) selon la revendication 16 ou 17, dans lequel la deuxième plaque de ressort (1b) est conçue pour réduire sa flexion par aération du premier espace de pression (4) ou par la soumission du premier espace de pression (2, 4) avec une surpression, afin de presser, lors de l'appui de la première extrémité de la deuxième plaque de ressort (1b) sur la première surface d'appui (101) du deuxième élément de boîtier (3b), avec la deuxième extrémité de la deuxième plaque de ressort (1b) sur la deuxième surface d'appui (102) du deuxième élément de boîtier (3a) de telle sorte qu'une transmission d'une force de serrage et/ou de freinage de la surface de serrage (7) de l'élément de serrage (8) du deuxième élément de boîtier (3a) à l'objet (5) à serrer et/ou freiner est ainsi effectuée et le dispositif (10) change de l'état ouvert à l'état fermé.

19. Dispositif de serrage et/ou de freinage (10) selon la revendication 16, 17 ou 18, dans lequel le dispositif (10) est conçu de telle sorte que, par aération du premier espace de pression (4) ou par la soumission du premier espace de pression (4) avec une surpression, la première surface d'appui (101) et la deuxième surface d'appui (102) d'au moins un des deux éléments de boîtier (3a, 3b) s'éloignent l'une de l'autre et/ou la flexion d'au moins une des plaques de ressort (1a, 1b) diminue, et le dispositif (10) change ainsi de l'état ouvert à l'état fermé.

20. Dispositif de serrage et/ou de freinage (10) selon l'une quelconque des revendications 15 à 19, dans lequel l'au moins un espace de pression comprend un deuxième espace de pression (2), le deuxième espace de pression (2) étant disposé à l'intérieur du ressort (1) entre les deux plaques de ressort (1a, 1b), de préférence dans lequel le dispositif (10) est conçu de telle sorte, que, par l'aération du deuxième espace de pression (2) ou par la soumission du deuxième espace de pression (2) avec une surpression, la première surface d'appui (101) et la deuxième surface d'appui (102) d'au moins l'une des deux parties de boîtier (3a, 3b) se déplacent l'une vers l'autre et/ou la flexion d'au moins l'une des plaques de ressort (1a, 1b) augmente, et ainsi le dispositif (10) passe de l'état fermé à l'état ouvert.
